# EUROPEAN PATENT APPLICATION

(11) **EP 1 653 367 A1**
(43) Date of publication of application: **03.05.2006**
(21) Application number: 04771222.9
(22) Date of filing: 28.07.2004
(51) Int. Cl.: G06F 13/00

(54) **CONTENT BROADCAST DISTRIBUTION SYSTEM, TRANSMITTER AND RECEIVER APPARATUSES USED THEREIN, AND CONTENT BROADCAST DISTRIBUTION METHOD**

(30) Priority: 28.07.2003 JP 2003281012; 28.07.2004 JP 2004220821
(71) Applicant: MATSUSHITA ELECTRIC INDUSTRIAL CO., LTD., Kadoma-shi, Osaka 571-8501 (JP)
(72) Inventor: SHIKATANI, Yukio, Yokohama-shi, Kanagawa 236-0045 (JP)
(74) Representative: Balsters, Robert
(86) International application number: PCT/JP2004/011187
(87) International publication number: WO 2005/010764

(57) **Abstract**

The present invention is intended to provide a content multicasting system capable of quickly finding the location of a content to be multicast simultaneously. According to the invention, contents to be simultaneously released are extracted on the basis of attribute information on contents, a location table in which location information on the extracted contents and their content identifiers are associated with each other is transmitted, and location information on the contents is acquired by searching the received location tables with priority. This arrangement enables each receiving apparatus, when it intends to find out the location of a content, to promptly know the location of the content by searching with priority among the received location tables, the location table consisting only of contents to be simultaneously released, and as a result concentration of attempted accesses to a transmitting apparatus can avoided.

## Description

### BACKGROUND OF THE INVENTION

### Field of the Invention

The present invention relates to content distribution service using broadcasting or telecommunications facilities, and more particularly to a content multicasting system avoiding concentration of accesses from receiving apparatuses to a transmitting apparatus which multicast contents, a transmitting apparatus and a receiving apparatus for use therein, and a pertinent content multicasting method.

### Description of the Related Art

Today, content distribution services are extensively provided over broadcast channels and the Internet. In a content distribution service using broadcast channels, each program (a content) is identified by an event_id in SI (service information), and the locator of the program is indicated by the broadcast channel and time information. Having selected a program, a user can acquire the broadcast channel and time information with the event_id of the program as the key, and video-record the program. In a content distribution service using the Internet, contents in HTML (Hyper Text Markup Language) are distributed, and a URL (Uniform Resource Locator) indicates the locator of content in HTML. In this case, HTML accessing is accomplished directly designating the locator of content.

Japanese Patent Published Unexamined Application No. 2000-285057 (hereinafter referred to as Patent Reference 1) discloses a transmission system in which a content identifier for identifying a content in common between broadcasting and the Internet, a table indicating the relationship between that content identifier and the means of accessing that content (locator) from a transmitting apparatus to a receiving apparatus, and the receiving apparatus accesses the desired content on the basis of that table. Even if the same content exists in a plurality of locations, that set can be designated. On the other hand, Japanese Patent Published Unexamined Application No. 2002-229881 (hereinafter referred to as Patent Reference 2) discloses a technique of coordinated use of name solution (finding the locator from the content identifier) existing on a plurality of networks by content name solution means which a receiving apparatus is provided with.

### SUMMARY OF THE INVENTION

However, when contents to be simultaneously released to the audience, such as broadcast programs and newly released films (on VOD) are to be provided, access attempts to find the locator concentrate on the transmitting apparatus. Suppose, for instance, a situation in which a broadcast program is to be recorded by presetting. The program may well be produced by the time is actually sent on the air. Since the system according to Patent Reference 1 handles all the contents in the same way, where many contents are to be handled, a vast table has to be searched for them, and it will take a long time to find the locator indicating the location of any desired content. This is true not only of broadcast programs but of any kind of content to be simultaneously released to the audience.

Where a broadcast program is to be recorded by presetting, the same content is subjected to location solution at the time of presetting and at the starting time of recording in the same way, but neither Patent Reference 1 nor Patent Reference 2 offers no other processing than repeating the same location solution every time, resulting in wasteful receiver processing.

An object of the present invention is to provide, in view of the problems noted above, a content multicasting system capable of quickly finding the location of a content to be multicast simultaneously, and as a result enabling concentration of attempted accesses to a transmitting apparatus to be avoided. Another object is to provide a content multicasting system which can adapt to even an abrupt change in the location of the content to be accessed, foresee from a receiving apparatus concentration of attempted accesses to a transmitting apparatus and need not perform location solution for the same content a plurality of times, a transmitting apparatus and a receiving apparatus for use therein, and a pertinent content multicasting method.

According to the invention, a content to be simultaneously released is extracted on the basis of attribute information on contents, a location table in which location information on the extracted content and its content identifier are associated with each other is transmitted, and location information on the contents is acquired by searching the received location tables with priority. This arrangement enables each receiving apparatus, when it intends to find out the location of a content, to promptly know the location of the content by using the location table it has received and, even if the content is to be simultaneously released, to prevent access attempts from more than one receiving apparatus from concentrating on the transmitting apparatus.

Also, location information on contents is acquired by extracting a content which is to be simultaneously released, further extracting only the location table regarding the content immediately before its release out of a location table in which the location information on the extracted content and its content identifier are associated with each other, transmitting that location table immediately before the release of the content, and searching the received location table with priority. This serves to reduce the size of the location table for knowing the location of the content and makes possibly prompt discovery of the location of that content from the content identifier, with the result that any abrupt change in the location of the content can be successfully coped with.

Further, attribute information regarding contents whose locations have been inquired about are stored, the content to be simultaneously released is extracted on the basis of attribute information on that content, a location table in which the location information on the extracted content and its content identifier are associated with each other is transmitted, and the location information on the content is acquired by searching the received location table with priority. This enables the trend of the content the user is actually attempting to access to be analyzed, and enables the location table of contents which may be simultaneously accessed to be extracted and the location of the content to be promptly acquired thereby, with the result that concentration of access attempts on the transmitting apparatus can be avoided.

Also, attribute information regarding contents whose locations have been inquired about is stored, the method of acquiring location information on the contents (including the conditions of accessing the contents, the position of location solution, and the location table for use in locator solution) at least at the next or subsequent attempt to acquire location information on the contents is generated for each content on the basis of attribute information on that content, and a location solution information table putting together all these items of information is generated. Then, a location solution information table in which content identifiers and location solution information related to the content identifiers are associated with each other is transmitted. Then, the location solution information table is referenced with priority, and location information on the contents is thereby acquired. This makes it possible to promptly know the location of the content by sending location solution information in advance to the receiving apparatus with a request for locator as the trigger, and having the receiving apparatus acquire the locator on the basis of the location solution information. As a result, concentration of access attempts on the transmitting apparatus can be avoided.

In the content multicasting system according to the invention, a location table (table in which content identifiers and their locators are matched with each other) of contents on which access attempts concentrate in the same period on a time series is extracted, and that location table alone is multicast to the receiving apparatus in advance; the receiving apparatus can promptly find the location of the content by referencing that location table with priority and acquiring the matching locators of contents, with the result that concentration of access attempts on the transmitting apparatus can be avoided.

Also, by preparing a location table consisting only of contents immediately before release and sending that table to the receiving apparatus immediately before their release, the size of this location table can be made smaller than what consists of all the applicable contents, and the locator of the target content can be quickly found, so that an abrupt change in locator can be successfully coped with.

Further, as it is possible to collect and analyze the viewing and listening trend of many users on the basis of the attributes of contents whose locators were requested by the receiving apparatus to the transmitting apparatus, and a location table of contents more likely to be simultaneously accessed can be extracted on that basis, the location of the content can be promptly acquired, with the result that concentration of access attempts on the transmitting apparatus can be avoided.

Also, it is possible to promptly know the location of the content by sending location solution information including the conditions of accessing the content, the position of location solution, and the location table for use in locator solution in advance to the receiving apparatus with a request for locator as the trigger, and having the receiving apparatus obtain the received location solution information with priority. As a result, concentration of access attempts on the transmitting apparatus can be avoided.

The above-stated and other objects and advantages of the present invention will become more apparent from the following description of preferred embodiments thereof when taken in conjunction with the accompanying drawings.

### BRIEF DESCRIPTION OF THE DRAWINGS

Fig. 1 is a block diagram of the transmitting apparatus in a content multicasting system, which is Embodiment 1 of the present invention;
Fig. 2 is a block diagram of the receiving apparatus in the content multicasting system, which is Embodiment 1 of the invention;
Fig. 3 illustrates a stored contents list in content registering means in the transmitting apparatus;
Fig. 4 illustrates a content delivery schedule table in distribution schedule setting means in the transmitting apparatus;
Fig. 5 illustrates a content release schedule table in distribution schedule setting means in the transmitting apparatus;
Fig. 6 is a flowchart of simultaneous accessibility determination processing in the transmitting apparatus;
Fig. 7 illustrates a location table for multicasting use;
Fig. 8 illustrates a location table for ordinary use;
Fig. 9 illustrates the transmission pattern of the location table in location distribution control means in the transmitting apparatus;
Fig. 10 illustrates distribution management of the location table in the location distribution control means in the transmitting apparatus;
Fig. 11 illustrates a location solution sequence table in location solution means in the receiving apparatus;
Fig. 12 is a flowchart of location solution processing by the location solution means in the receiving apparatus;
Fig. 13 is a flowchart of processing in video recording presetting service;
Fig. 14 is a flowchart of location table extraction processing by the location distribution control means in the transmitting apparatus;
Fig. 15 is a block diagram of the transmitting apparatus in a content multicasting system, which is Embodiment 3 of the invention;
Fig. 16 illustrates an access level list;
Fig. 17 is a flowchart of processing of access level setting by simultaneous accessing trend classifying means in the transmitting apparatus;
Fig. 18 is a block diagram of the transmitting apparatus in a content multicasting system, which is Embodiment 4 of the invention;
Fig. 19 is a block diagram of the receiving apparatus in the content multicasting system, which is Embodiment 4 of the invention;
Fig. 20 illustrates a location solution information table;
Fig. 21 is a flowchart of processing that takes place when information on location solution is generated in the transmitting apparatus;
Fig. 22 is a flowchart of processing that takes place when information on location solution is transmitted by the transmitting apparatus;
Fig. 23 is a flowchart of location solution processing that takes place when a content is selected by the receiving apparatus;
Fig. 24 is a block diagram showing the overall configuration of the content multicasting system;
Fig. 25 is a block diagram of the transmitting apparatus in a content multicasting system, which is Embodiment 5 of the invention;
Fig. 26 is a block diagram of the receiving apparatus in the content multicasting system, which is Embodiment 5 of the invention;
Fig. 27 illustrates a location table transmitted from the transmitting apparatus to the receiving apparatus in Embodiment 5 of the invention;
Fig. 28 is a flowchart of simultaneous accessibility determination processing in the transmitting apparatus of Embodiment 5 of the invention; and
Figs. 29 illustrate examples of location table for multicasting use prepared for different broadcast channels in Embodiment 5 of the invention.

### DETAILED DESCRIPTION OF THE PREFERRED EMBODIMENTS

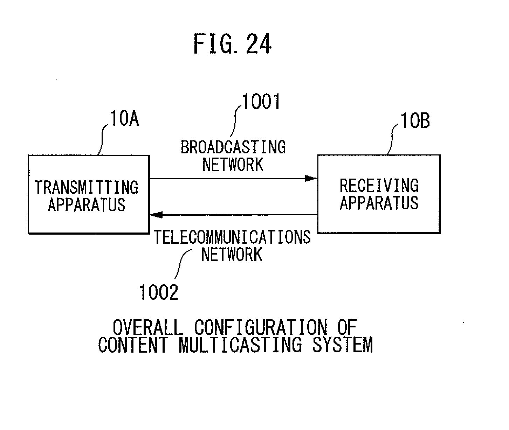

Preferred embodiments of the present invention will be described below. First, the overall configuration of a content multicasting system is shown in Fig. 24. The content multicasting system is a system comprising a transmitting apparatus 10A for managing content identifiers for uniquely identifying contents and content location information indicating the locations of contents and a receiving apparatus 10B for acquiring information on the location of a given content by inquiring of the transmitting apparatus 10A on the basis of the content identifier of that content. Data exchanging between the transmitting apparatus 10A and the receiving apparatus 10B is accomplished via a multicasting network comprising of a broadcasting network 1001 and a telecommunications network 1002 and an interactive network comprising the telecommunications network 1002. The system is configured of one ormore each of the transmitting apparatus 10A and of the receiving apparatus 10B.

### (Embodiment 1)

Embodiment 1 to be described below is a content multicasting system in which a location table (location table for multicasting use) stating information on the locations of contents which may be simultaneously accessed by the transmitting apparatus 10A is generated, the location table for multicasting use is transmitted to the receiving apparatus 10B, and the receiving apparatus 10B references that location table for multicasting use with priority thereby to acquire a content.

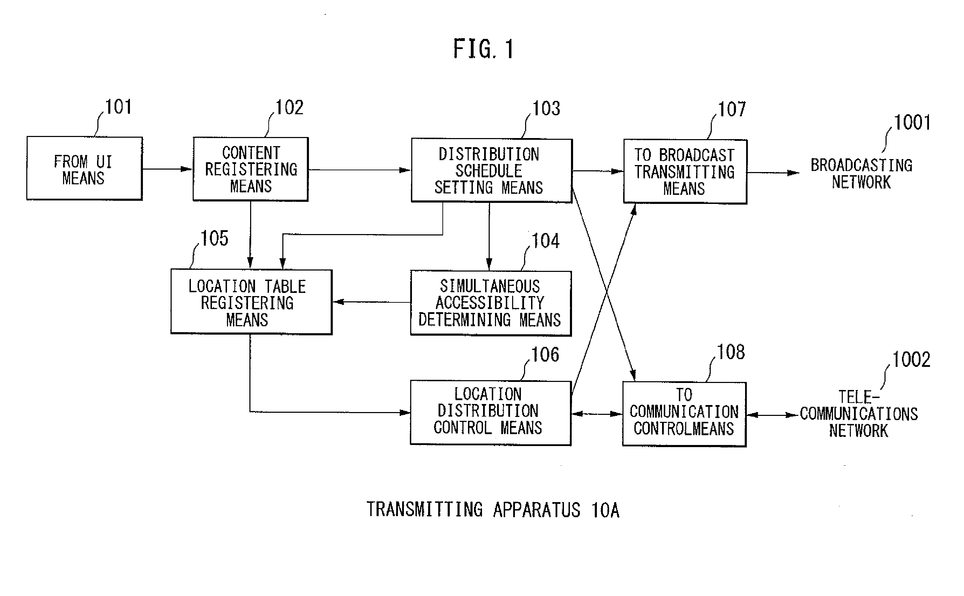

First, the configuration of the transmitting apparatus 10A in the content multicasting system will be described with reference to Fig. 1.

### <Configuration of transmitting apparatus 10A>

The transmitting apparatus comprises UI means 101 which is input/output means for the person operating that transmitting apparatus; content registering means 102 which is connected to the UI means 101, issues and registers a content identifier for uniquely identifying a content designated by the UI means 101; distribution schedule setting means 103 for setting a delivery schedule or a release schedule for content distribution service of the contents stored in the content registering means; simultaneous accessibility determining means 104 for extracting out of the contents set by the distribution schedule setting means the content to be simultaneously released on the basis of the content location information set by the distribution schedule setting means 103; location table registering means 105 receiving, from the content registeringmeans 102 or the distribution schedule settingmeans 103, content location information on the content extracted by the simultaneous accessibility determining means 104, and generating and storing a location table indicating relationships between content location information and content identifiers; location distribution control means 106 for receiving the location table generated by the location table registering means 105 and instructing the location table to be transmitted; broadcast transmitting means 107 for transmitting via the broadcasting network 1001 data to be transmitted by broadcasting out of a distribution schedule and the location table; and communication control means 108 for transmitting via the telecommunications network 1002 data to be transmitted by telecommunications out of the distribution schedule and the location table.

The functional units of this transmitting apparatus will be described in detail below.

The UI means 101, which is the input/output means for the person operating the transmitting apparatus 10A, is provided with an interface for registering contents. It designates the content to be registered with the content registering means 102. The user interface for use here is one which accepts signals from an input device, such as a keyboard, mouse or touch panel, and outputs the signals on a display screen, loudspeaker or the like. The content may be a text (in the form of HTML, BML, XML or the like), aural message (AAC, MP3 or the like), still picture (JPEG or the like), moving pictures (MPEG, AVI, WMV, Real or the like) or a combination of two or more of the foregoing. Meta data, which is data representing the characteristics of a given content (title, characters in a drama, and the like) and information on the user' attributes and preferences, is also treated as a kind of contents.

### <Contents registering means 102>

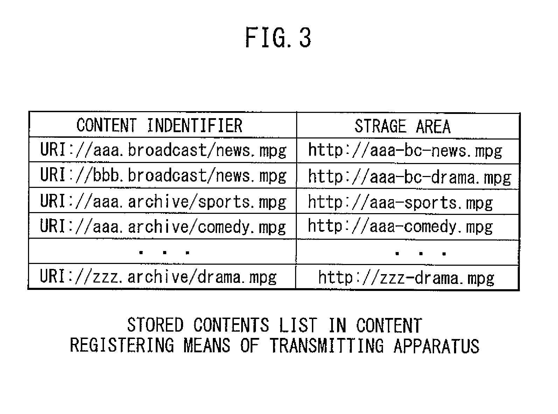

The content registering means 102 receives, from an external input device (HDD, DVD, CD-ROM, SD card, memory stick, RAM or the like), the content designated by the UI means 101, issues a content identifier for uniquely identifying the received content, and stores the contents into a storage medium in the transmitting apparatus 10A. The area in which the content is stored is determined at random by the content registering means 102, which holds a stored contents list (Fig. 3) indicating the match between the content identifier and the storage area of the contents it identifies. By using this stored contents list, the substance of the prescribed contents can be selected according to its content identifier. For instance, it is meant that the substance of the contents represented in Fig. 3 by content identifier URI://aaa.broadcast/news.mpg is located at HYPERLINK "http://aaa-bc-news.mpg", http://aaa-bc-news.mpg. The content identifier here uniquely identifies a content, and takes the form of a string of characters or numerals, such as URI (Universal Resource Identifiers) or URN (Universal Resource Name). The storage medium in the transmitting apparatus 10A may be a nonvolatile storage medium, such as an HDD, DVD-RAM/R/RW, SD card or memory stick, or a volatile storage medium, such as a RAM. The storage area of contents may be expressed, for instance, in URL (HYPERLINK "http://xxx/yyy/zzz", http://xxx/yyy/zzz, ftp://xxx/yyy/zzz or the like) or file path (HYPERLINK "file://xxx/yyy/zzz", file://xxx/yyy/zzz). Incidentally, the content registering means 102 may as well perform storage in accordance with the area of contents storage designated by the UI means 101.

### <Distribution schedule setting means 103>

The distribution schedule setting means 103 sets a schedule, regarding each content stored in the content registering means 102, the starting time and duration for its transmission from the transmitting apparatus 10A (content delivery schedule) and a schedule of the starting time and duration or its presentation and release on the receiving apparatus 10B (content release schedule). After that, it hands over the contents to the broadcast transmitting means 107 and the communication control means 108 in accordance with the set content delivery schedule table. It also hands over to the communication control means 108 the content matching the content identifier designated by the communication control means 108. It may be pertinent here to describe what the content delivery schedule and the content release schedule are. The content delivery schedule concerns the day and hours of the start of transmission and the duration of broadcast (or the day and hours of the transmission) where contents are to be transmitted by multicasting, such as IP multicasting in broadcasting or telecommunications, and may be the broadcast schedule of each program at a broadcast station. The content release schedule is a schedule to providing the same content simultaneous to one or more receiving apparatuses 10B, and states the duration of release, or the day and hours of the release and those of the end of release, to users. For instance, it shows the period of release of a film. According to this schedule, the receiving apparatus 10B judges whether or not the content can be viewed. If it is within the period of release, the film will be judged to be available for viewing or if not, it will be judged unavailable.

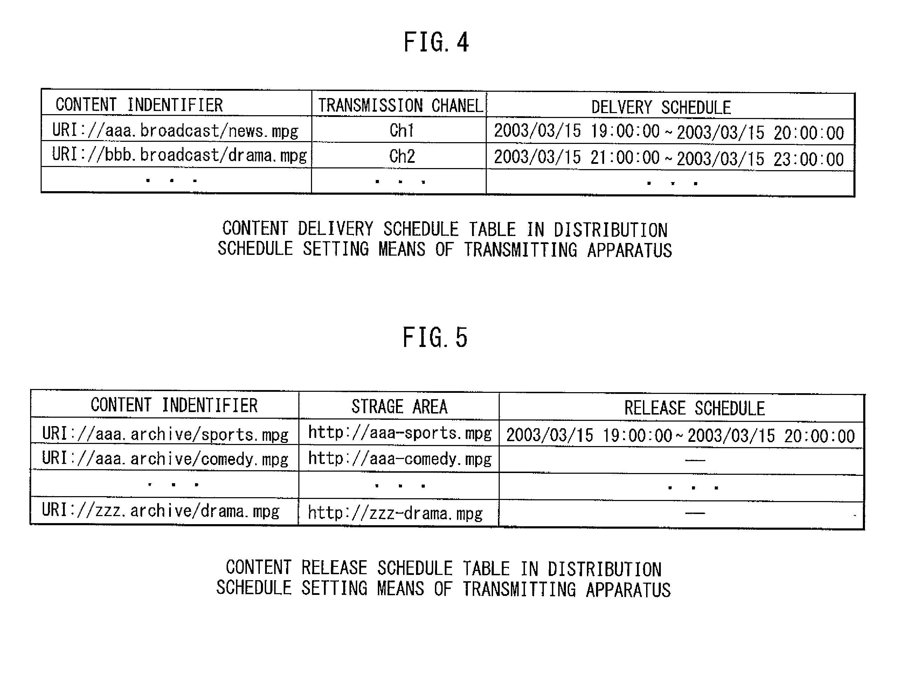

Fig. 4 illustrates a content delivery schedule table stating a content delivery schedule, and Fig. 5, a content release schedule table stating a content release schedule. For instance, Fig. 4 shows that a content whose content identifier is URI://aaa.broadcast/news.mpg is broadcast from 19: 00 through 20: 00 on March 15, 2003 over Ch1. Or for instance, Fig. 5 shows that a content whose content identifier is URI://aaa.archive/sports.mpg is stored at http://aa-sports.mpg, and will be simultaneously released (the content will be made available for viewing by users) from 00:00 March 1, 2003 through 00:00 April 1, 2003. An entry "-" in the release schedule box means that the pertinent content is available for viewing all the time.

### <Simultaneous accessibility determining means 104>

The simultaneous accessibility determining means 104, if there is any change in the content delivery schedule or the content release schedule set by the distribution schedule setting means 103, will determine whether or not all or some of the contents in the content delivery schedule table and the content release schedule table are simultaneously accessible, and delivers to the location table registering means 105 the pertinent content identifier and the result of determination.

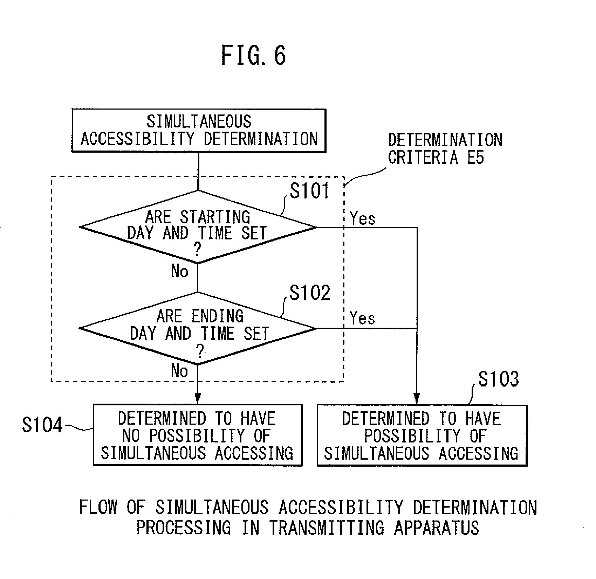

How will be described simultaneous accessibility determination processing of each content with reference to Fig. 6. First it is determined whether or not the starting time is set as a factor of the delivery schedule or the release schedule of that content (step S101). If it is, the contents will be determined to have a possibility of simultaneous accessing (step S103). If not, it will be determined whether or not the ending time is set as a factor of the delivery schedule or the release schedule (step S102). If it is, the contents will be determined to have a possibility of simultaneous accessing (step S103). If not, the contents will be determined to have no possibility of simultaneous accessing (step S104). Incidentally, simultaneous accessibility determination processing may as well be performed periodically. Also, while both the starting time and the ending time are referenced as determination criteria E5 in Fig. 6, only one of them may be referenced, or some other condition or conditions may be added to determination criteria E5.

### <Location table registering means 105>

The location table registering means 105 receives from the simultaneous accessibility determining means 104 a content identifier and the result of simultaneous accessibility determination regarding the pertinent content. According to the result of that determination, it prepares or updates a location table showing the matches between content identifiers and locators indicating the locations of the respective contents (their storage locations, their delivery schedule and so forth), and registers it in a storage medium in the transmitting apparatus 10A. The locator of content here refers to both the location on the spatial axis and that on the temporal axis. The former may be, for instance, URL (http://xxx/yyy/zzz), file path (HYPERLINK, "file://xxx/yyy/zzz", file://xxx/yyy/zzz), channel (Ch1), broadcast frequency band and so on. The latter may be, for instance, the date, time, period and so on. The location table registering means 105, in order to prepare the location table, receives the storage location as a locator from the content registering means 102 and schedule information (channel, starting time, ending time, period and so on) as a locator from the distribution schedule setting means 103 with the content identifier as the key. The type of the location table (for multicasting use or for ordinary use) is identified by associating in advance a tag indicating the type with the location table.

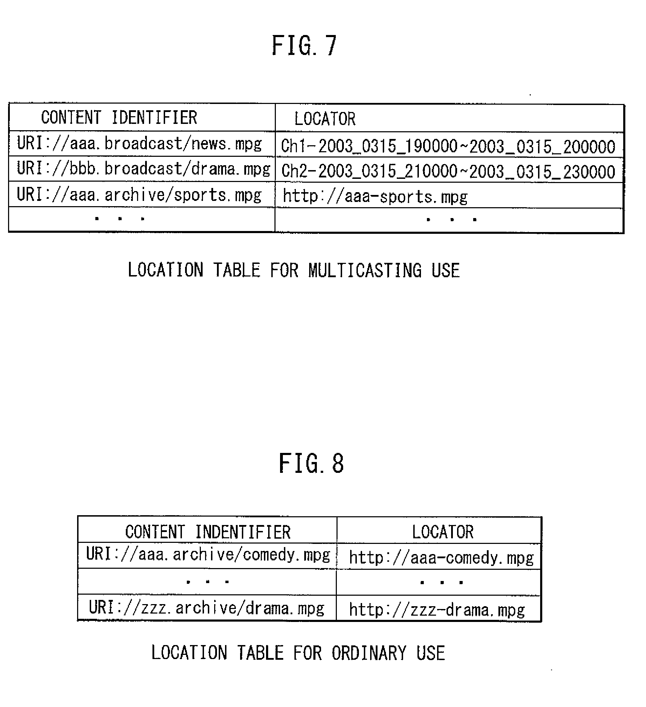

Next, the procedure of preparing a location table matching the result of determination is shown below. In this procedure, a location table whose form of use differs with the result of simultaneous accessibility determination regarding each content is prepared or updated. If the result of determination indicates simultaneous accessibility of the contents, their content identifier and locator will be registered in a location table for multicasting use (Fig. 7). If the result does not indicate simultaneous accessibility of the contents, their content identifier and locator will be registered in a location table for ordinary use (Fig. 8) . Incidentally, the location table registering means 105 may as well manage location tables by assigning version information to each table to make it possible to determine whether or not a given location table for multicasting use or location table for ordinary use has been updated. Version management may as well be uniformly carried out irrespective of the type of location table. Hereupon, an example of processing to register the location tables of Fig. 7 and Fig. 8 are to be registered from the schedule tables of Fig. 4 and Fig. 5 will be described. There are three contents whose delivery schedules or release schedules are made definite from the schedule tables of Fig. 4 and Fig. 5, i.e. "URI://aaa.broadcast/news.mpg", "URI://bbb.broadcast/drama.mpg" and "URI://aaa.archive/sports.mpg". Therefore, these three contents are added to the location table for multicasting use (Fig. 7), and the remaining contents "URI://aaa.archive.broadcast/comedy.mpg", "URI://aaa.archive. broadcast/drama.mpg" ... are added to the location table for ordinary use (Fig. 8).

### <Location distribution control means 106>

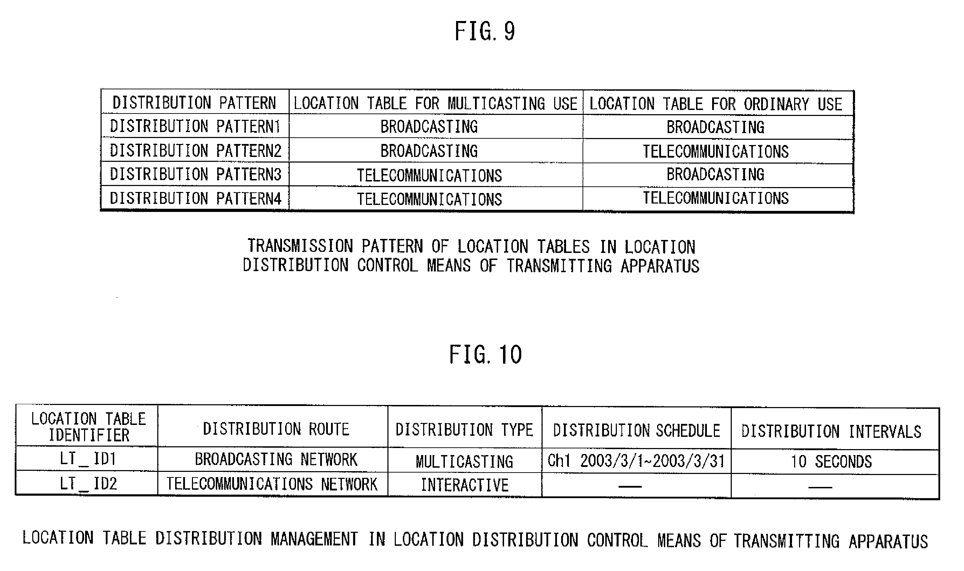

The location distribution control means 106 acquires the latest location table for multicasting use and location table for ordinary use from the location table registering means 105, and hands them over to the broadcast transmitting means 107 or the communication control means 108. Also, the location distribution control means 106, when receiving a content identifier from the communication control means 108 and being asked for a matching locator, searches for the locator matching the received content identifier by using the latest location table in the location table registering means 105, and returns it to the communication control means 108. Now will be described the timing of handing over the location table to the broadcast transmitting means 107 and that of handing it over the communication control means 108. First, the location table is handed over to the broadcast transmitting means 107 at regular intervals. The intervals may be differentiated by the type of location table such as the type for multicasting use or the type for ordinary use, or a schedule may be set, instead of regular intervals, for handing it over. To the communication control means 108, when the communication control means 108 specifies the type of location table (for multicasting use or for ordinary use) and requests its acquisition, the latest location table is handed over to the communication control means 108 according to its type. In this way, there are four variation patterns of handing over a location table to the broadcast transmitting means 107 or the communication control means 108 as shown in Fig. 9, and any pattern can be used. Incidentally, where the communication control means 108 is capable ofmulticasting as does the broadcast transmitting means 107, for instance where it has an IP multicast broadcasting function, the location table may be handed over to the communication control means 108 at regular intervals like the timing of handing over the table to the broadcast transmitting means 107.

Now will be described with reference to Fig. 10 distribution processing from the location distribution control means 106 to the broadcast transmitting means 107 or to the communication control means 108. As shown in Fig. 10, the location distribution control means 106 distinguishes different location tables by identifier; for the distribution route of the tables there is a choice between "broadcast network" and "telecommunications network", and for each network there is a choice between "multicasting" and "interactive". Multicasting means consecutively sending location tables to the receiving apparatus 10B, while interactive means that a location table is sent on demand from the receiving apparatus 10B. Further, as parameters for controlling the distribution of location tables include the distribution schedule (distribution channel and distribution period) and distribution intervals within the schedule. For instance, a location table denoted by LT#ID1 uses multicasting over the broadcasting network 1001 and is distributed via channel Ch1 at 10-second intervals from March 1, 2003 through March 31, 2003. A location table denoted by LT#ID2 matches interactive distribution over the telecommunications network 1002. Incidentally, the timing at which the location distribution control means 106 hands over a location table to the broadcast transmitting means 107 or the communication control means 108 need not be fixed, but an input interface may be provided so that inputting can be performed as desired or the timing altered afterwards.

### <Broadcast transmitting means 107>

The broadcast transmitting means 107 performs multicasting to receiving apparatuses 10B over the broadcasting network 1001. In multicasting, a content and a location table are received from the distribution schedule setting means 103 and the location distribution control means 106, respectively, and distributed to more than one receiving apparatus 10B at the same time over the broadcasting network 1001. The content may be sent, for instance, as a section of PSI (Program Specification Information) or SI (Service Information) of the MPEG 2 system or by multiplexing in the data carousel transmission format of DSM-CC. Incidentally, the broadcasting network 1001 may be any broadcasting network which permits multicasting of contents by BS/CS digital broadcasting, terrestrial digital broadcasting, digital CATV broadcasting or the like.

### <Communication control means 108>

The communication control means 108 performs interactive communication with the receiving apparatus 10B and multicasting to the receiving apparatus 10B over the telecommunications network 1002. In interactive communication, the communication control means 108 receives signals from the receiving apparatus 10B via the telecommunications network 1002, and exchanges data with the receiving apparatus 10B. When it has received a content identifier as a signal from the receiving apparatus 10B, it returns with the location distribution control means 106 a matching locator on the basis of the location table to the receiving apparatus 10B. Or when the type of location table (for multicasting use or for ordinary use) and a request for its acquisition comes from the receiving apparatus 10B, the location distribution control means 106 acquires the matching location table from the location table registering means 105 and sends it back via the telecommunications network 1002. Tn multicasting, as in TP multicast broadcasting the location table is multicast to more than one receiving apparatus 10B via the telecommunications network 1002. Incidentally, the telecommunications network 1002 means a network for distributing contents by way of the Internet or otherwise, and may be multicasting by interactive communication or IP multicasting.

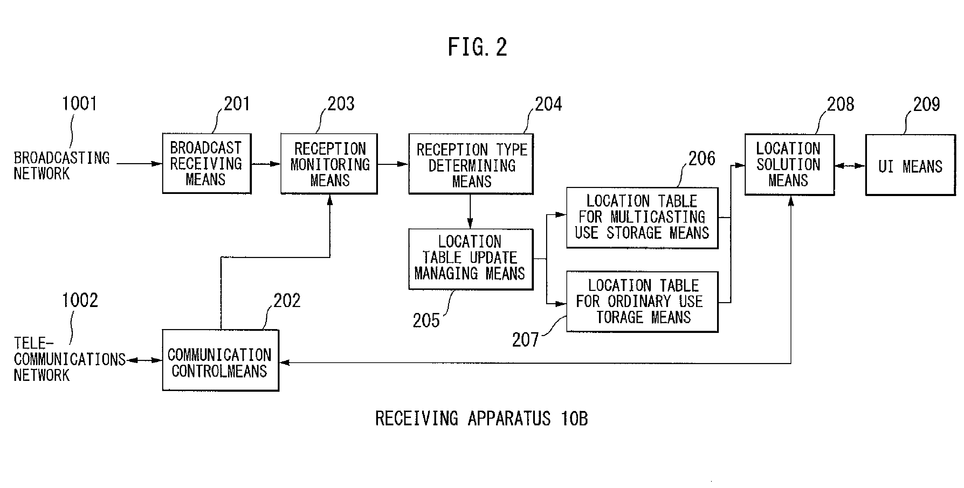

Next, the configuration of the receiving apparatus 10B in the content multicasting system will be described with reference to Fig. 2.

### <Configuration of receiving apparatus 10B>

The receiving apparatus comprises broadcast receiving means 201 for receiving data from the broadcasting network 1001; communication control means 202 for exchanging data with an external apparatus (transmitting apparatus) by interactive communication via the telecommunications network 1002; reception monitoring means 203 for monitoring the reception of location tables out of the data received by the broadcast receiving means 201 and the communication control means 202; reception type determining means 204 for determining the type of the location table received from the reception monitoring means 203; location table update managing means 205 for determining whether or not location tables of each received from the reception type determining means 204 are updated; location table for multicasting use storage means 206 for storing those location tables in which only the contents to be simultaneously released are stated out of the location tables determined by the location table update managing means 205 to have been updated; location table for ordinary use storage means 207 for storing those location tables in which ordinary contents are stated out of the location tables determined by the location table update managing means 205 to have been updated; location solution means 208 for acquiring content location information by searching with priority given to the location tables stored in the location table for multicasting use storage means 206 out of the location tables stored in the location table for multicasting use storage means 206 or the location table for ordinary use storage means 207; and UI means 209 which is input/output means for the person operating the receiving apparatus.

The functional units of this receiving apparatus will be described in detail below.

### <Broadcast receiving means 201>

The broadcast receiving means 201 receives data from the broadcasting network 1001, and decodes those data, which may be in, for instance, the MPEG2 system or the DSM-CC data carousel format.

### <Communication control means 202>

The communication control means 202 exchanges data by interactive communication via the telecommunications network 1002 . It also receives multicast data, such as those distributed by IP multicast broadcasting.

### <Reception monitoring means 203>

The reception monitoring means 203 constantly monitors the reception of location tables, out of the data received by the broadcast receiving means 201 and the communication control means 202 and, upon reception, hands them over to the reception type determining means 204.

### <Reception type determining means 204>

The reception type determining means 204 determines whether each location table received from the reception monitoring means 203 is a location table for multicasting use or a location table for ordinary use, and hands over to the location table update managing means 205 the result of determination and update information (version information) on the location table. The determination of the table type, whether for multicasting use or ordinary use, is accomplished by reference a tag associated with the location table at the time of distribution. Distinction between a location table for multicasting use and one for ordinary use can also be made according to the route of reception. For instance, a table received from the broadcast receiving means 201 can be assumed to be a location table for multicasting use, and one received from the communication control means 202, as a location table for ordinary use, or vice versa.

### <Location table update managing means 205>

The location table update managing means 205 checks whether or not each of the location table (for multicasting or ordinary use) received from the reception type determining means 204 is updated; if it is, the location table will be temporarily stored in a memory and it will be handed over, if the updated location table is a location table for multicasting use, to the location table for multicasting use storage means 206 or if a location table for ordinary use, to the location table for ordinary use storage means 207. The location tables here are checked for update according to a version number assigned to each location table. If the version number is identical, the location table will not be updated, or if the version number is different, the location table will be updated. Where version numbers are assigned irrespective of the type of location table (for multicasting or ordinary use), the update checkup may be performed irrespective of the type of table. Although whether to update a location table is determined according to the version number assigned to the location table in the method described above, this is not the only applicable method. For instance, if a previous location table and the received location table differ in locator matching the content identifier, the former may be updated to the locator of the newly received location table. Or the received location table may be unconditionally overwritten for updating. Thus, the earlier location table may be deleted, and the newly received location table may be stored instead. Or the transmitting apparatus may transmit as a location table only the altered parts of the previously transmitted location table on a content-by-content basis, so that the receiving apparatus can reference the altered location table and update or add only the newly updated or added parts of the locator of content on a content-by-content basis.

### <Location table for multicasting use storage means 206>

The location table for multicasting use storage means 206 stores into a storage medium the location table for multicasting use received from the location table update managing means 205. When storing it, it adds to or updates the old location table for multicasting use. The storage medium may be a nonvolatile storage medium, such as an HDD, DVD-RAM/R/RW, SD card or memory stick, or a volatile storage medium, such as a RAM. Incidentally, when it is stored, the table may be stored as separate data to manage the latest table in a readily distinguishable way instead of overwriting the older table. Further in this case, the transmitting apparatus 10A or the receiving apparatus 10B may assign a term of validity to each location table, and automatically delete the location table when the term expires.

### <Location table for ordinary use storage means 207>

The location table for ordinary use storage means 207 stores into a storage medium the location table for ordinary use received from the location table update managing means 205. When storing it, it adds to or updates the old location table for ordinary us. The storage mediummaybe a nonvolatile storage medium, such as an HDD, DVD-RAM/R/RW, SD card or memory stick, or a volatile storage medium, such as a RAM. Incidentally, when it is stored, the table may be stored as separate data to manage the latest table in a readily distinguishable way instead of overwriting the older table. Further, either different storage media or the same storage medium can be used by the location table for multicasting use storage means 206 and the location table for ordinary use storage means 207.

### <Location solution means 208>

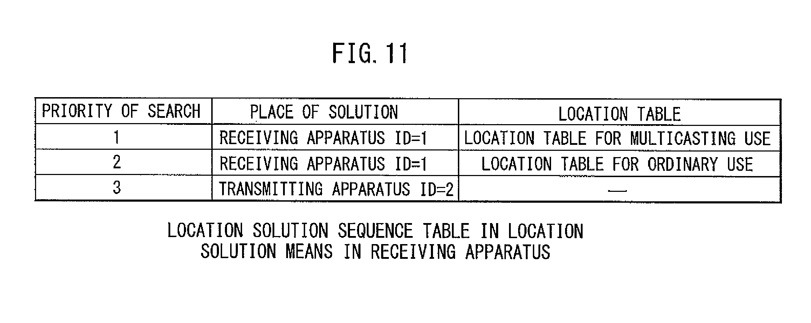

The location solutionmeans 208 searches for the locator of content by using as the search key the content identifier received from the UI means 209 and in accordance with a location solution sequence table (e.g. Fig. 11) in which the procedure of location solution is stated, and hands over the locator found by the search to the UI means 209. When searching for the locator in accordance with the location table in the receiving apparatus 10B, the locator is found from the location table of the location table for multicasting use storage means 206 and the location table for ordinary use storage means 207. When a locator is requested from the transmitting apparatus 10A, the request is made by sending the pertinent content identifier to the transmitting apparatus 10A via the communication control means 202, and the locator matching the content identifier is received.

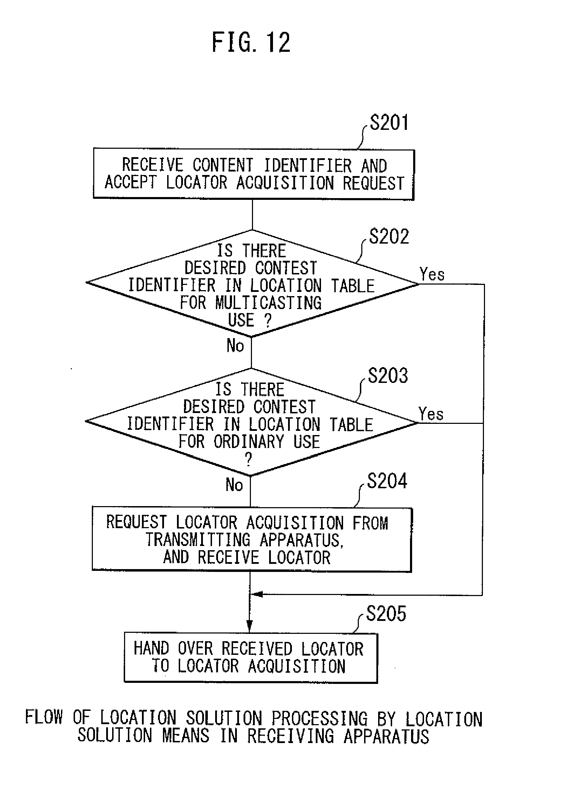

Now, the flow or processing by the location solution means 208 on the basis of a location solution sequence table, whose example is shown in Fig. 11, is charted in Fig. 12. Under a request from the UI means 209 for acquisition of a locator, the pertinent content identifier is received (step S201) . The location table for multicasting use in the receiving apparatus 10B is scanned at a priority level of 1 to search the table for the desired content identifier (step S202). If the desired content identifier is found, the matching locator will be returned to the UI means 209 (step S205) . If the desired content identifier is not found, the location table for ordinary use in the receiving apparatus 10B will be scanned at a priority level of 2 to search the table for the desired content identifier (step S203). If the desired content identifier is found, the matching locator will be returned to the UI means 209 (step S205). If the desired content identifier is not found, the content identifier will be handed over to the communication control means 202 at a priority level of 3, a locator will be requested from the transmitting apparatus 10A by interactive communication via the telecommunications network 1002, and in response to it the matching locator will be received from the communication control means 202 (step S204). The received locator will be returned to the UI means 209 (step S205).

### <UI means 209>

The UI means 209 is input/output means for the person operating the receiving apparatus 10B, and is provided with is provided with a user interface for selecting contents. Upon selecting a content, it hands over the identifier of the selected content to the location solution means 208. The user interface for use here is one that accepts signals from an input device, such as a keyboard, mouse or touch panel. It also receives a locator from the location solution means 208, causes the UI means 209 to perform processing, and presents it to the operation. The processing by the UI means 209 may be preset video recording, preset viewing, execution of video recording (downloading), viewing of a broadcast program, reproduction of a web content (viewing by VOD) or the like based on the locator received from the location solution means 208. The receiving apparatus 10B may either periodically or at a desired timing request the type of location table and its acquisition from the transmitting apparatus 10A via the telecommunications network 1002, and receive the matching location table.

### <Example of service>

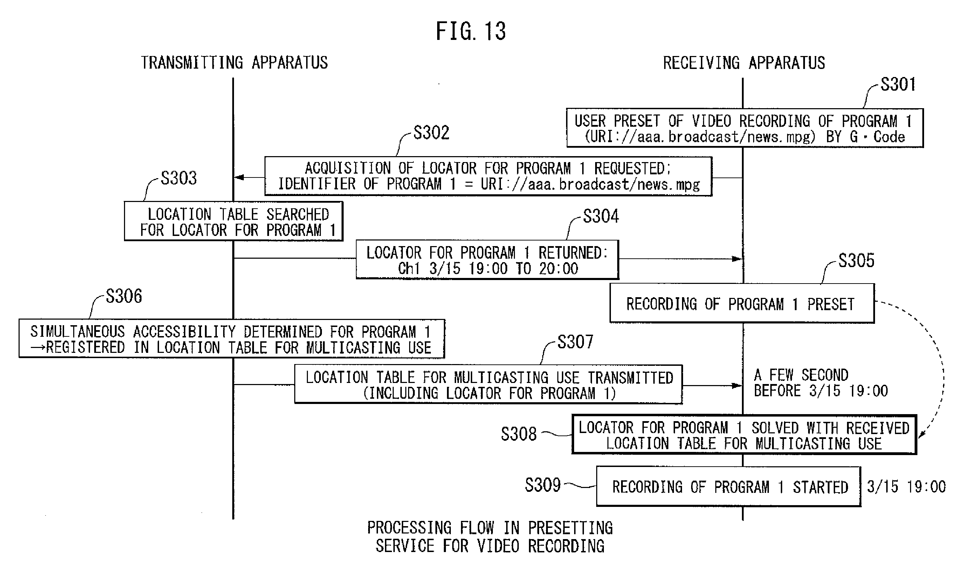

As an example to illustrate the effectiveness of the present invention, a case of presetting video recording of a broadcast program by a G-Code system will be described below. For instance, Fig. 13 charts the processing of video recording by G-Code of program 1 scheduled for broadcasting over channel 1 (Ch1) from 19:00 through 20:00 on March 15 from the time it is preset by the user until its recording is started. First, the user presets recording of broadcast program 1 by G-Code (step S301). The receiving apparatus 10B sends a content identifier (URI://aaa.broadcast/news.mpg) matching program 1 to the transmitting apparatus 10A and requests acquisition of a locator for program 1 (step S302). The transmitting apparatus 10A searches the location table it owns for a locator matching program 1 (step S303). The transmitting apparatus 10A returns to the receiving apparatus 10B the locator (Ch1 3/15 19:00 to 20:00) acquired as a result of the search (step S304). The receiving apparatus 10B presets the recording of program 1 according to the received locator (step S305). The transmitting apparatus 10A checks simultaneous accessibility, and adds the locator for program 1 to the location table for multicasting use consecutively transmitted on a regular basis (step S306). The transmitting apparatus 10A sends to the receiving apparatus 10B the location table for multicasting use in which the locator for program 1 is stated (step S307). A few seconds before the starting time of recording, the receiving apparatus 10B starts recording according to the preset processing at step S305, and acquires the locator for program 1 from the received location table for multicasting use (step S308). Recording of program 1 over Ch1 is started at 19:00 on March 15 (step S309) .

Incidentally, the timing of generating the location table for multicasting use which corresponds to step S306 is not limited to what is stated in the foregoing example of service, but can be positioned anywhere between the registration of program 1 and the start of program 1. Also, the timing of transmitting the location table for multicasting use, which corresponds to step S307, to the receiving apparatus 10B can be immediately before more than one receiving apparatus 10B are supposed to access the same content.

In the content registering means 102 of this embodiment of the invention, attributes of the pertinent content may either be externally inputted or assigned by the UI means 101, and the simultaneous accessibility determining means 104 may perform determination according to content attributes registered by the content registering means 102 as determination criteria E5. Examples of such attributes include such information items pertaining to the substance of the content as the title and the cast, such items pertaining to the essentials of the content as the bit rate, content size and encoding method, and such economic or legal items as the content viewing charge, copyright royalty and information on intellectual rights. These attributes may be either added to the stored contents list of Fig. 3 or associated with the content under separate management. Whereas there is a content multicasting system of acquiring contents, the invention does not limit itself to any process of acquiring the substance of any content on the basis of an acquired locator.

### <Effects>

As hitherto described, in Embodiment 1, a system of receiving a locator by inquiring of the transmitting apparatus 10A on the basis of the content identifier of the desired content makes it possible, even if the content may be simultaneously accessed, to quickly locate that content by separately transmitting in advance a location table for multicasting use consisting only of such contents and having the receiving apparatus 10B find out that content out of that table with priority. Simultaneous attempts to access the transmitting apparatus 10A by many receiving apparatuses 10B when the locator of content is to be acquired are thereby eliminated, and accordingly concentration of access attempts on the transmitting apparatus 10A can be thereby avoided. Other examples of services to which the invention can be effectively applied than preset video recording of broadcast programs include tuning to a broadcast channel, simultaneous release of a film (by VOD service), simultaneous release of information via the Internet and other services wherein many users may attempt to access the same content at the same time. For instance, in simultaneous information release via the Internet, the invention can also be effectively applied to services in which information on the Internet is automatically displayed on a television screen by data broadcasting, a number of buttons appear on the screen to enable the user to have desired information on the Internet displayed by selecting the appropriate one among the buttons, and meta data (information on the performer or landscape displayed on the screen or the like) can be acquired from the Internet interlocked with a broadcast program.

### (Embodiment 2)

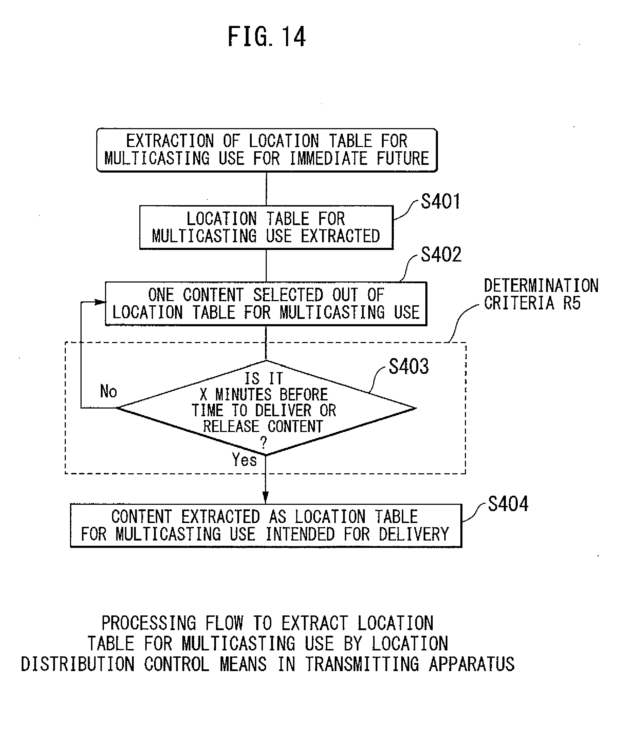

In Embodiment 2, out of location tables for multicasting use, only the location table related to the contents to be delivered or released in the immediate future is extracted and transmitted from the transmitting apparatus 10A. Processing by the location distribution control means 106 in the transmitting apparatus 10A of Fig. 1 will be described with reference to Fig. 14.

### <Location distribution control means 106>

Fig. 14 shows the flow of processing by the location distribution control means 106 in the transmitting apparatus 10A, namely the flow of processing that takes place to extract only what is to be transmitted out of the location table for multicasting use stored in the location table registering means 105. The location table for multicasting use is extracted out of the location table registering means 105 (step S401). One content is selected out of the extracted location table (step S402). It is determined whether or not the selected content is one to be accessed in the immediate future (soon to be delivered or released) (step S403) and if it is, the content will be added to the location table for multicasting use intended for immediate delivery (step S404).

The processing of Fig. 14 here can be executed either periodically or when the location table for multicasting use is altered. Or when a content is to be registered in a location table for multicasting use, the processing may be actuated by a preset timer at the starting time of delivering or releasing that registered content, or by the operator of the transmitting apparatus 10A when deemed appropriate. Also, step S402 may be executed on every content in the location table for multicasting use or, when the target content is already identified, only on that particular content. While the scheduled starting time of each content is used as the indicator for the extraction of the location table for multicasting use at step S403, the indicator is not limited to this. For instance, a content being delivered or released may as well be the object of extraction. Or if information regarding relationships between contents is also registered as the indicator for the extraction of the location table for multicasting use at step S403 at the time registering the contents, the extractionmay also be applied to the related contents by referencing that relationship information, and they can be added to the same location table for multicasting use. Incidentally, determination criteria R5 in Fig. 14 may as well be used as another reference in the determination of simultaneous accessibility by the simultaneous accessibility determining means 104 in addition to determination criteria E5 in Fig. 6.

### <Effects>

As described above, in Embodiment 2, even if a program is urgently revised immediately before its start, as the transmitting apparatus 10A is delivering the required minimum of the location table for multicasting use, the size of the location table for multicasting use at the receiving apparatus 10B is reduced to make updating quicker, and the number of locators to be searched according to the content identifier is also reduced to make the search quicker. Therefore, any change in schedule immediately before delivery or release can be promptly coped with.

### (Embodiment 3)

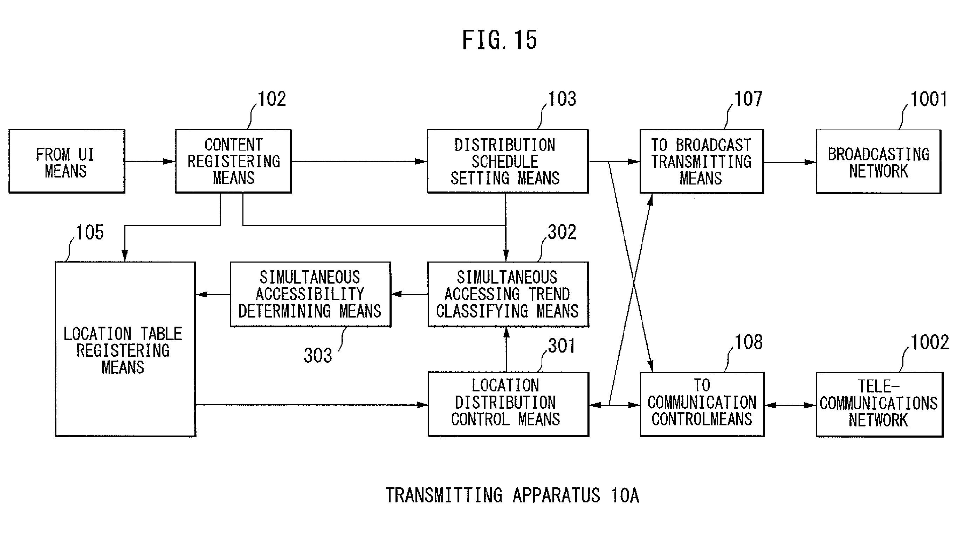

In Embodiment 3, when the transmitting apparatus 10A receives a request for the locator matching a content identifier from the receiving apparatus 10B via the telecommunications network 1002, the transmitting apparatus 10A stores the content for which the locator has been requested, collects and analyzes the user's viewing/listening trend based on the attributes of that content, and causes the analytical finding to be reflected in the criteria of determination of whether or not the receiving apparatuses 10B attempt accessing the same content. Fig. 15 shows the configuration of the transmitting apparatus 10A in this embodiment.

### <Location distribution control means 301>

Location distribution control means 301, when requested for a locator, hands over the content identifier relevant to the request to simultaneous accessing trend classifying means 302.

### <Simultaneous accessing trend classifying means 302>

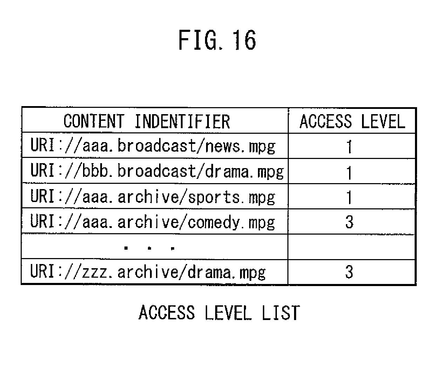

The simultaneous accessing trend classifying means 302, on the basis of the content identifier received from the location distribution control means 301, acquires the attributes of the pertinent content from the content registering means 102, and determines the level of simultaneous access (access level) to that content from the attributes of the content. It also acquires the content delivery schedule and the content release schedule from the distribution schedule setting means 103, and similarly determines the access level. After determining the access level of each content, it hands over to simultaneous accessibility determining means 303 a list of content identifiers and access levels (access level list). Fig. 16 shows an example of access level list. The lower the access level, the higher the possibility of being accessed simultaneously.

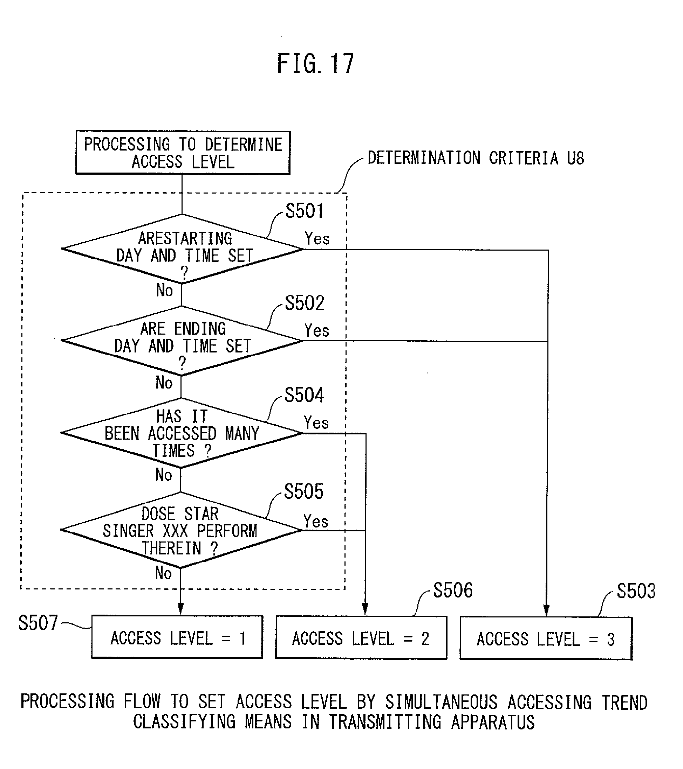

Hereupon, an example of determining the access level of each content is shown in Fig. 17. Processing at step S501 and step S502 according to determination criteria U8 in Fig. 17, as at S101 and S102 in Fig. 6, determines a content to be simultaneously accessible if its starting day and time or ending day and time are set, and assigns an access level of 1 to that content (step S503). If it does not fit step S501 and step S502, the number of past accesses to the content is calculated and if it is not smaller than a certain threshold (step S504) or an attribute that a certain star singer performs is attributed to that content (step S505), an access level of 2 will be assigned to that content (step S506). Further, an access level of 3 is assigned to a content which fits neither step S504 nor step S505 (step S507). Incidentally, determination criteria U8 for the access level and the relationship of matching between the attributes of a content and its access level are not limited to those described above. <Simultaneous accessibility determining means 303>

The simultaneous accessibility determining means 303 determines, on the basis of the access level list provided by the simultaneous accessing trend classifying means 302, whether a given table is to be treated as a location table for multicasting use or to be added to location tables for ordinary use with reference to a certain threshold level. The simultaneous accessibility determining means 303 may as well receive the access level list at the timing of being notified by the simultaneous accessing trend classifying means 302 of updating of the access level list and process determination on that basis.

### <Effects>

As described above, in Embodiment 3, since the access level is set for each content on the basis of the actual record of the user's accessing, it is possible to better foresee the possibility of simultaneous access concentration and with greater reliability, the location of any content can be promptly identified, and access concentration on the transmitting apparatus 10A can be avoided eventually.

### (Embodiment 4)

In Embodiment 4, when the transmitting apparatus 10A has received a request for a locator matching a given content identifier from the receiving apparatus 10B via the telecommunications network 1002, it sends to the receiving apparatus 10B the method of location solution when the receiving apparatus 10B is to access the same content next and subsequent times, triggered by a locator response, and the receiving apparatus 10B accesses the content in accordance with that method of location solution.

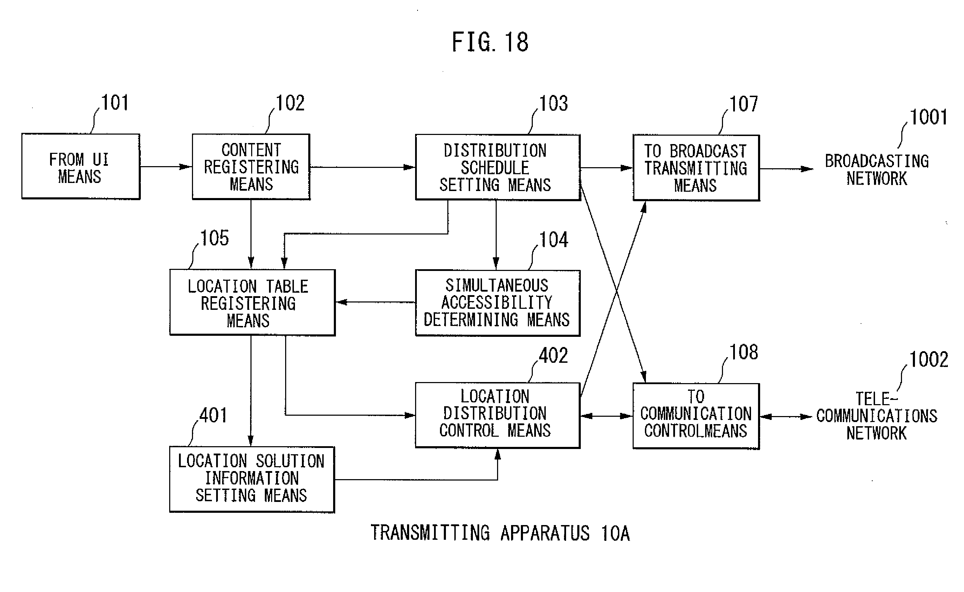

The configuration of the transmitting apparatus 10A in this embodiment is shown in Fig. 18. Different parts from the configuration of Embodiment 1 will be described below.

### <Configuration of transmitting apparatus 10A>

### <Location solution information setting means 401>

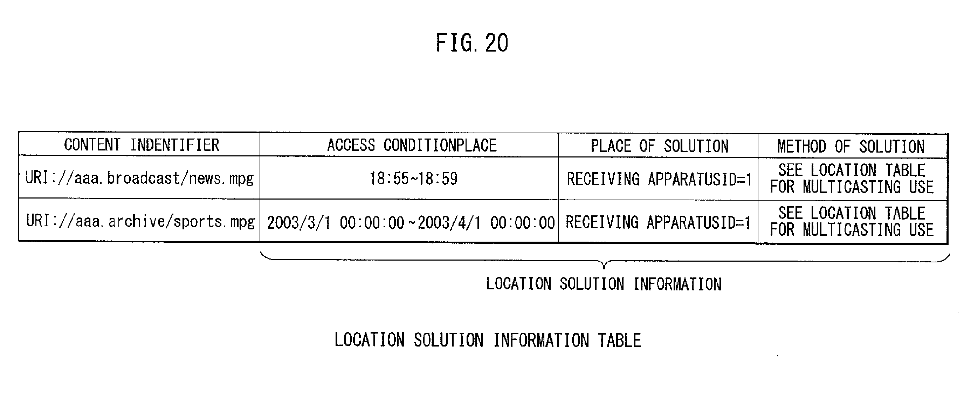

Location solution information setting means 401 generates and stores information that is needed when a locator is to be found on the basis of a content identifier (location solution information). First, the constituent elements of location solution information will be stated. The constituent elements include the conditions of accessing a given content on the next and subsequent occasions, the position of location solution then (in the receiving apparatus 10B, the transmitting apparatus 10A or elsewhere), and the location table at the time of solution. Here is shown an example of location solution information by citing the location solution information table of Fig. 20. Since a program having the content identifier of URI://aaa.broadcast/news.mpg is to start at 19:00 as shown in Fig. 4, the first line in Fig. 20 requires, when the content is to be accessed between 18:55 and 18:59, reference to the location table for multicasting use in the receiving apparatus 10B at "ID = 1" as location solution information on that content. The second line in Fig. 20 requires reference, since the content having the identifier of URI://aaa.archive/sports.mpg is to be released from 00:00'00 March 1, 2003 through 00:00'00 April 1, 2003, reference to the location table for multicasting use in the receiving apparatus at "ID = 1" for accessing the content on the next and subsequent occasions during the release period as location solution information. Incidentally, the access conditions stated in Fig. 20 need not be limited to time information, but may also designate the state of the receiving apparatus 10B (a few seconds before execution of recording, recording under way or the like) the user's operating state (viewing the content or the like), the number of past accesses, the state of load on the network and so forth.

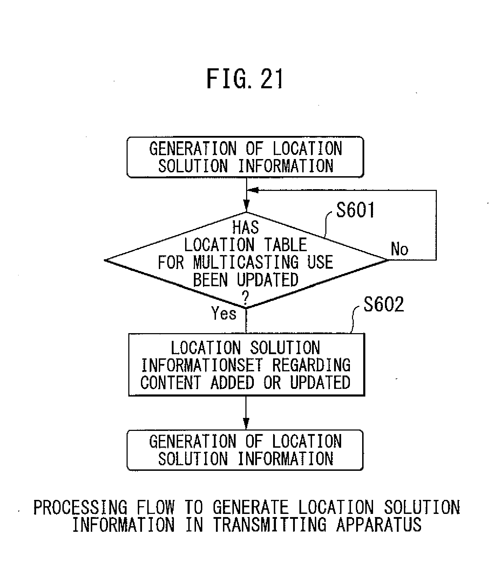

Next, the method of generating the location solution information table will be shown in Fig. 21. First, the location table for multicasting use stored in the location table registering means 105 is monitored for any change (step S601). If there is no change, it will be monitored again for any subsequent change and, if any change is made, location solution information regarding the content added to or updated in the location table for multicasting use will be set (step S602). Incidentally, what is to be set as location solution information may be either automatically set by default or set each time by external inputting. Or location solution information may be set when there is any change in the location table for multicasting use as stated above, or when a locator is requested by the receiving apparatus 10B location solution information may be set for the pertinent content. The content on which location solution information is to be set is supposed in the foregoing description to be one added to or updated in the location table for multicasting use, but location solution information may be set on any content which the simultaneous accessibility determining means 104 determines to involve possibility of simultaneous accessing. Incidentally, the version code or the like may also be assigned to facilitate management by helping determination of any change in or addition to the location solution information table.

### <Location distribution control means 402>

Location distribution control means 402, in addition to the operation of the location distribution control means 106 in Embodiment 1, stores any content identifier matching which a locator has been requested, acquires location solution information matching that content identifier from the location solution information setting means 401, and hands it over to the communication control means 108.

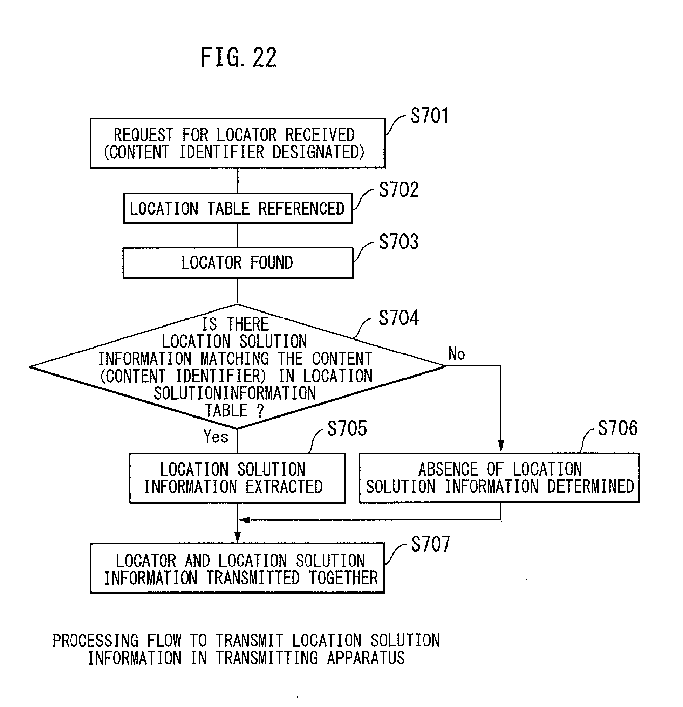

The flow of processing to transmit a location solution information table is charted in Fig. 22. First, the location distribution control means 402 receives a request for a locator (step S701). It references a location table in the location table registering means 105 (step S702), and searches for and finds the locator matching the received content identifier (step S703). Then, it searches the location solution information table in the location solution information setting means 401 for location solution information matching the received content identifier (step S704) . If any location solution information is found, it will be extracted (step S705), if not, the absence of location solution information will be determined (step S706). The locator found at step S703 and the earlier location solution information table are handed over to the communication control means 108, and the communication control means 108 transmits the locator and the location solution information together (step S707). Incidentally, though the location solution information table is handed over to the communication control means 108 for transmission to the receiving apparatus 10B, the procedure is not limited to this, but it can as well be handed over to the broadcast transmitting means 107 for transmission to the receiving apparatus 10B. Also, the location solution information table is supposed to be sent together with the locator at the time of returning the locator according to the foregoing description, but it may be sent at another timing.

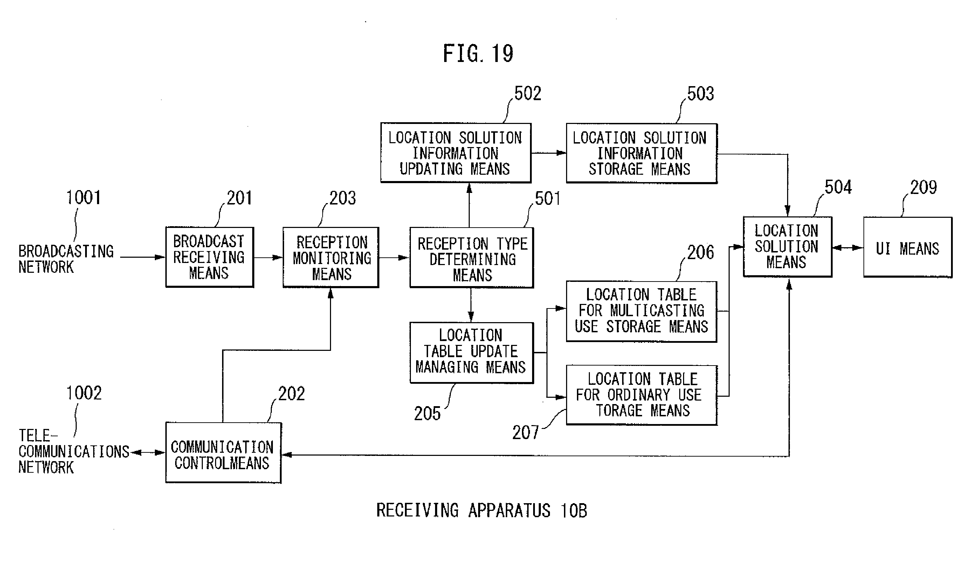

Next, the configuration of the receiving apparatus 10B in this embodiment is shown in Fig. 19. Parts differing from Fig. 2 will be described below.

### <Receiving apparatus 10B>

### <Reception type determining means 501>

In this embodiment, in addition to the distinguishment between a location table for multicasting use and a location table for ordinary use in Embodiment 1, a location solution information table is determined from received data and, if the received data is found constituting a location solution information table, it will be handed over to location solution information updating means 502. The method of determination is to reference a tag which is associated at the time of distribution.

### <Location solution information updating means 502>

The location solution information updating means 502 checks whether or not a location solution information table received by the reception type determining means 501 is updated and, if it is, will temporarily store it into a memory, and hand it over to location solution information storage means 503. The location solution information table is checked for update here according to the version number assigned to the location solution information table as in version management of location tables in Embodiment 1.

### <Location solution information storage means 503>

The location solution information storage means 503 stores the location solution information table into the storage medium. When it is stored, it will be added to or update the old location solution information table. The storage medium may be a nonvolatile storage medium, such as an HDD, DVD-RAM/R/RW, SD card or memory stick, or a volatile storage medium, such as a RAM. Incidentally, when it is stored, the table may be stored as separate data to manage the latest table in a readily distinguishable way instead of overwriting the older table.

### <Location solution means 504>

Location solution means 504, when searching for the locator of content selected by the UI means 209, searches for the locator by first referencing the location solution information table of the location solution information storage means 503 for location solution information regarding the pertinent content.

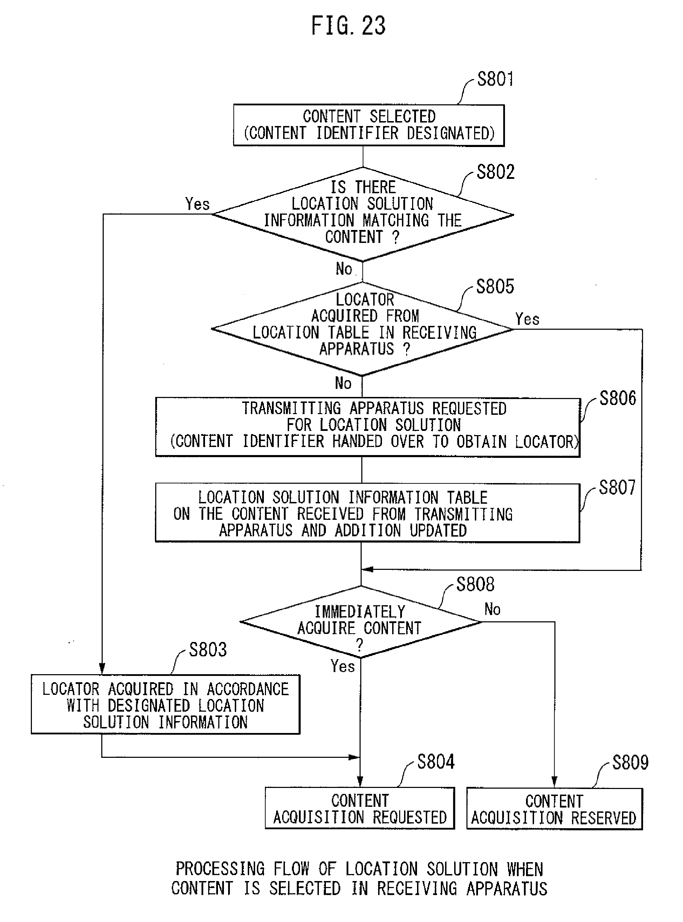

Fig. 23 shows the flow of processing that takes place when the locator of content is to be acquired (location solution). The content is selected by the UI means 209 (step S801). It is determined whether or not location solution information matching the selected content is in the location solution information table of the location solution information storage means 503 (step S802). If there is, the locator will be acquired in accordance with the location solution information (step S803), and the pertinent content will also be acquired (step S804). If not, the locator will be acquired from the location table designated by default (step S805). If the locator fails to be acquired at step S805, the pertinent content identifier will be sent to the transmitting apparatus 10A via the communication control means 202 to request the locator, which will then be acquired (step S806). Also, the location solution information table will be received from the transmitting apparatus 10A, and addition to and updating of the table will be performed (step S807). It is judged whether or not the content can be immediately obtained from the acquired locator (step S808). If it can, the content will be acquired (step S804). If immediate acquisition is impossible, the content will be reserved for acquisition (S809). In such a procedure, whenever the acquisition of the locator for the same content is attempted next time onward, the locator can be found out on the basis of the location solution information table received at step S807. Hereupon, the case of step S808 and step S809 will be described in a suppose case of presetting video recording of, for instance, a broadcast program. Step S808 is a step of presetting video recording and, as a future day and time will be designated as the locator, no content can be immediately acquired. Therefore, the process goes ahead to step S809. At step S809, video recording is preset for the scheduled day and time of broadcast. Though solution according to the location table for multicasting use in the receiving apparatus 10B is specified as location solution information at the next and subsequent access attempts in this embodiment, this is not the only possible procedure. Also in this embodiment, when the location solution means 504 of the receiving apparatus 10B requests a locator from the transmitting apparatus 10A, an identifier of the locator requesting source (e.g. the receiving apparatus) may be sent simultaneously with the content identifier, and the location distribution control means 402 of the transmitting apparatus 10A may alter location solution information from one locator requesting source to another. For instance, a separate transmitting apparatus may be designated as the solution position for each of the receiving apparatuses 10B. Furthermore, since it is possible to vary with the access conditions the time range in which to access the content, the same transmitting apparatus 10A can be caused to access it sequentially.

### <Effects>

In Embodiment 4, the conditions of accessing a given content, the position of location solution, and location solution information indicating the location table to be used for locator solution is sent in advance to the receiving apparatus 10B as the initial request for a locator as the trigger, and the receiving apparatus 10B can promptly know the location of the content by acquiring the locator on the basis of the location solution information, with the result that concentration of access attempts from the receiving apparatuses 10B on the transmitting apparatus 10A can be avoided.

### (Embodiment 5)

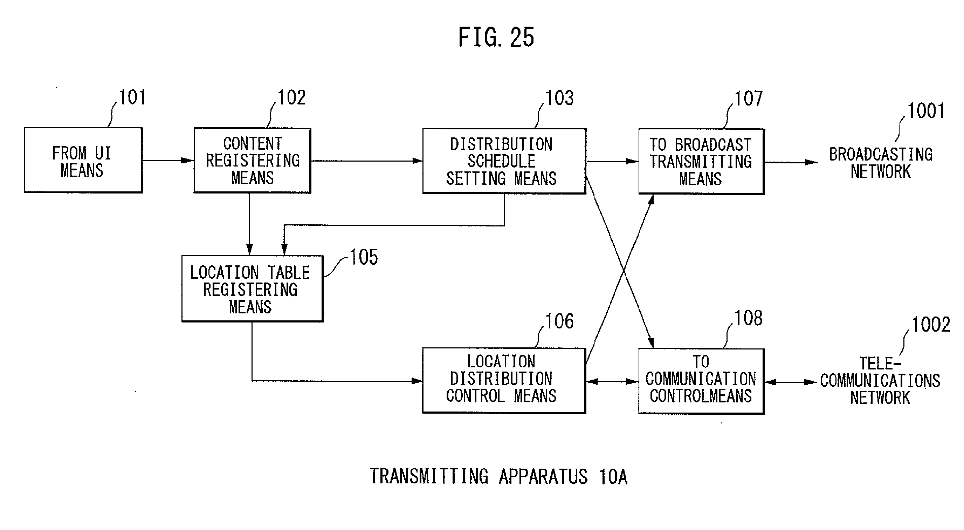

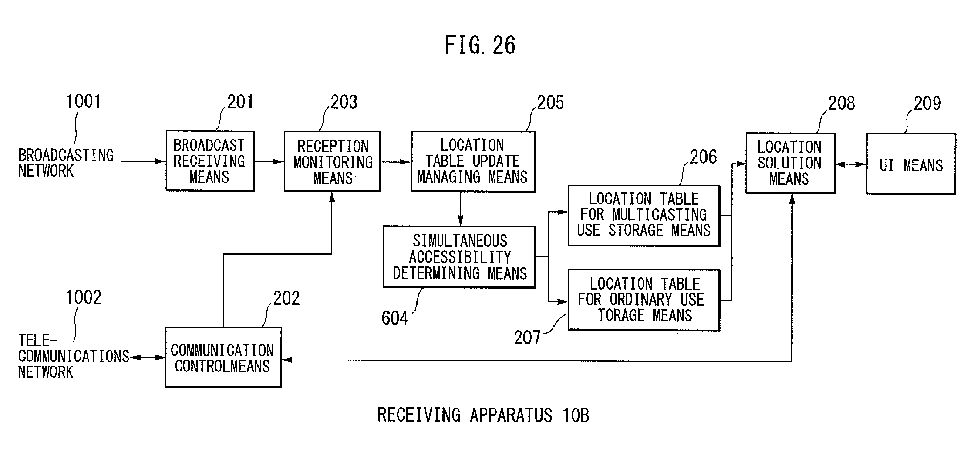

Fig. 25 through Fig. 28 illustrate a content multicasting system, which is Embodiment 5 of the invention. Of these drawings, Fig. 25 is a block diagram showing the configuration of a transmitting apparatus used in this embodiment, and Fig. 26, a block diagram showing the configuration of a receiving apparatus. The transmitting apparatus comprises the UI means 101, the content registering means 102, the distribution schedule setting means 103, the location table registering means 105, the location distribution control means 106, the broadcast transmitting means 107 and the communication control means 108. This transmitting apparatus has basically the same configuration as the transmitting apparatus in Embodiment 1, with a difference that this embodiment has no functional unit corresponding to the simultaneous accessibility determining means 104 in Embodiment 1. Further, the location table registering means 105 in this Embodiment 5 has a function to receive content location information on contents from the content registering means 102 and the delivery schedule and release schedule of contents from the distribution schedule setting means 103, deliver them as one constituent element matching the same content identifier in the location table and additionally register the release schedule.

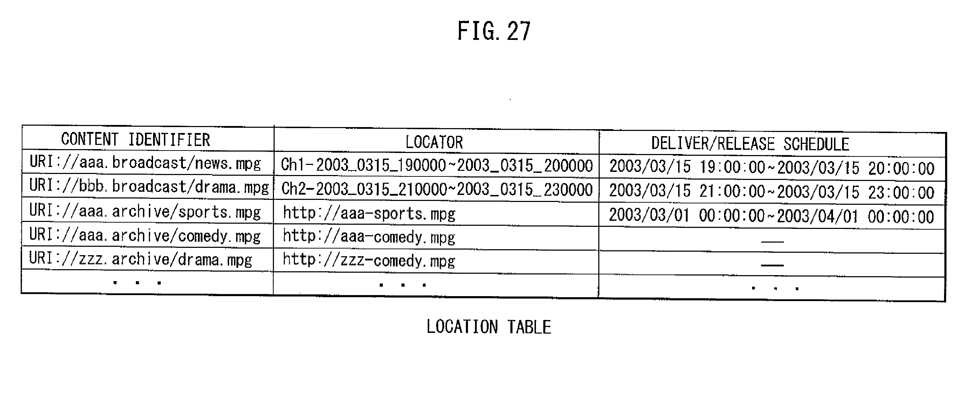

Fig. 27 illustrates a location table prepared as described above. The location table shown in Fig. 27 differs from the location table of Embodiment 1 (Fig. 7 and Fig. 8) in that it includes contents, locators and delivery/release schedules.

The receiving apparatus comprises the broadcast receiving means 201 which receives broadcast data from the broadcasting network 1001, the communication control means 202 which receives telecommunications data from the telecommunications network 1002, the reception monitoring means 203, the location table update managing means 205, the simultaneous accessibility determining means 604 , the location table for multicasting use storage means 206, the location table for ordinary use storage means 207, the location solution means 208 and the UI means 209. This receiving apparatus has basically the same configuration as the receiving apparatus in Embodiment 1, with a difference that this embodiment has no functional unit corresponding to the reception type determining means 204 in Embodiment 1 but additionally has the simultaneous accessibility determining means 604. The simultaneous accessibility determining means 604 in this embodiment 5 references the delivery/release schedule of the location table, which is judged to have been updated by the location table update managing means 205 (Fig. 27), to determine whether or not each content is one to be simultaneously released.

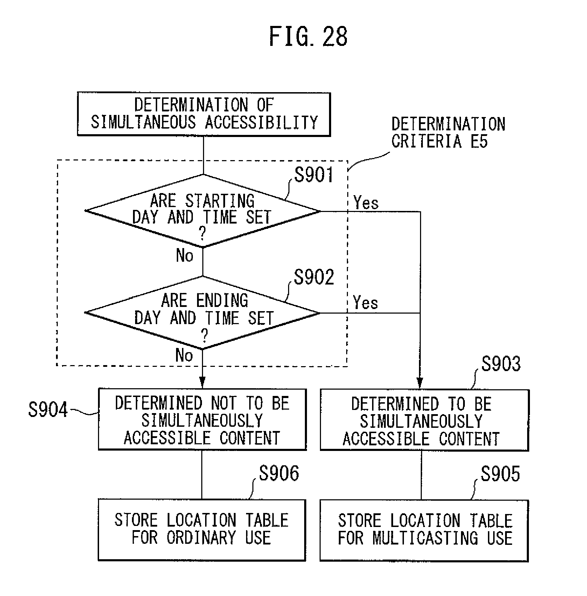

Now will be described the simultaneous accessibility determination processing of each content in this embodiment 5. Fig. 28 is a flowchart of simultaneous accessibility determination processing of each content by the simultaneous accessibility determining means 604. When the simultaneous accessibility determination processing is started, the simultaneous accessibility determining means 604 first references the delivery/release schedule of the location table judged to have been updated by the location table update managing means 205 (Fig. 27), and determines whether or not the starting time is set as an element of the delivery schedule or release schedule of the contents (step S901). Each content is thereby determined to be or not to be a content to be simultaneously released. If the starting time is set, the simultaneous accessibility determining means 604 will judge that it may be a content to be simultaneously accessed (step S903). On the other hand, if no starting time is set, the simultaneous accessibility determining means 604 determines whether or not the ending time is set as an element of delivery schedule or release schedule of the content (step S902). If the ending time is set, the simultaneous accessibility determining means 604 will judge that it may be a content to be simultaneously accessed (step S903). On the other hand, if no ending time is set, the simultaneous accessibility determining means 604 will judge that it is a content with no possibility to be simultaneously accessed (step S904). Then the simultaneous accessibility determining means 604, if it finds any of the contents to have possibility of being simultaneously accessed as a result of the above-described operation (step S903), will store in the location table for multicastinguse storage means 206 and update only the location table concerning contents to be simultaneously released as the location table for multicasting use (step S905). The location table for multicasting use has the same data structure as what is shown in Fig. 7. The simultaneous accessibility determining means 604, if it finds any of the contents to have no possibility of being simultaneously accessed as a result of the above-described operation (step S904), will store in the location table for multicasting use storage means 206 and update only the location table concerning other contents than those to be simultaneously released as the location table for ordinary use (step S906). The location table for ordinary use has the same data structure as what is shown in Fig. 8. Incidentally, the simultaneous accessibility determination processing by the simultaneous accessibility determining means 604 may as well be operated periodically. Further, though determination criteria E5 in Fig. 28 apply to both the starting time and the ending time, they may as well apply to only one of them, or some other condition may be added to determination criteria E5.

To add, though the foregoing description of Embodiment 5 supposes a case in which the location table having the delivery/release schedule as one of its constituent elements (see Fig. 27) is transmitted from the transmitting apparatus to the receiving apparatus, this is not absolutely necessary, but a location table in which content identifiers and locators, which constitute content location information indicating the locations of the pertinent contents, are associated with each other and a schedule table in which content identifiers and the delivery/release schedules of the pertinent contents are associated with each other may be individually transmitted from the transmitting apparatus to the receiving apparatus. Then, the receiving apparatus receives the schedule table, references the received schedule table to prepare a location table consisting only of contents to be simultaneously released within the received location table (location table for multicasting use), and stores and manages it in the location table for multicasting use storage means 206. Out of other contents, it prepares a location table for ordinary use, and stores and manages it in the location table for ordinary use storage means 207.

In a variation of Embodiment 5, the simultaneous accessibility determining means 604 may classify the location tables to be prepared as a result of the simultaneous accessibility determination processing into not only two types, including the location table for multicasting use and the location table for ordinary use, but the location table for multicasting use into a plurality of types. For instance, the location table for multicasting use could be classified by the broadcast channel or by the telecommunications operator. To realize such a mode, when a location table is to be transmitted from the transmitting apparatus to the receiving apparatus, the location table (Fig. 27) and channel information can be transmitted. These location table and channel information can be transmitted either in a pair or separately. The channel information may as well be incorporated into the data field of the location table.

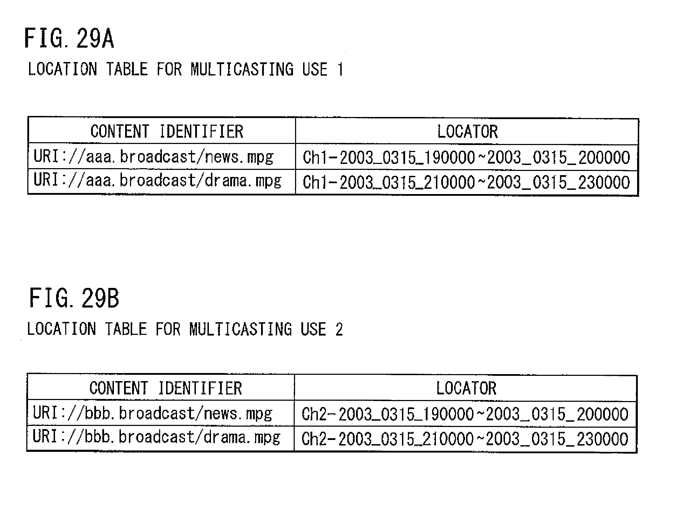

Figs. 29 illustrate location tables for multicasting use prepared for different broadcast channels, which are examples of classification by broadcast channel. Fig. 29A shows a location table for multicasting use 1 putting together contents distributed by broadcast station aaa, and Fig. 29B, a location table for multicasting use 2 listing contents distributed by broadcast station bbb. The receiving apparatus, during reproduction of a content, searches with priority the location table for multicasting use of the same channel as the broadcast channel being reproduced (or the same telecommunications operator as the one providing the content being reproduced) . For instance, if a broadcast of station aaa (channel 1) is being viewed, the location table for multicasting use for channel 1 is searched with priority. This enables the location of the sought-for content to be found out more quickly.

It is also conceivable to prepare a table specifying the relationships between the channel being viewed and the type of location table to be searched with priority, and to determine the location table to be searched with priority on the basis of that matching table. In this case, the matching table may either be supplied from the transmitting apparatus or automatically generated in the receiving apparatus.

Although the invention has been described with reference to preferred embodiments thereof illustrated in the accompanying drawings, obviously persons skilled in the art can readily vary or modify the invention without deviating from its true spirit and scope. The invention covers these variations and modifications as well.

## Claims

1. A content multicasting system provided with a transmitting apparatus for managing content identifiers which uniquely identify contents and content location information indicating locations of said contents and a receiving apparatus for acquiring said contents by inquiring of said transmitting apparatus on the basis of said content identifiers and thereby obtaining said content location information, wherein:
said transmitting apparatus comprises simultaneous accessibility determining means which extracts contents to be simultaneously released, out of contents for which a delivery schedule representing a delivery period or a release schedule representing a release period is set as attribute information, on the basis of said attribute information; location table registering means for preparing and storing location tables in which content location information on the contents extracted by said simultaneous accessibility determining means and content identifiers of said extracted contents are associated with each other; and location distribution control means for controlling distribution of the location tables registered with said location table registering means to the receiving apparatus, and said transmitting apparatus transmits said location tables to the receiving apparatus; and
said receiving apparatus comprises location table storage means for receiving said location tables transmitted from said transmitting apparatus and storing updated location tables out of said received location tables; and
location solution means for acquiring content location information by searching with priority said location tables stored in said location table storage means.

2. The content multicasting system according to Claim 1, wherein a mechanism of data distribution between said transmitting apparatus and said receiving apparatus is configured of a multi casting network using a broadcast network and a telecommunications network, an interactive network using a telecommunications network, or a combination of such networks.

3. The content multicasting system according to Claim 1, wherein said transmitting apparatus is provided with location distribution control means for extracting only a location table concerning contents immediately before release out of the location tables in said location table registering means, and transmits said extracted location table immediately before the release of each of said contents .

4. The content multicasting system according to Claim 1, wherein said transmitting apparatus is provided with simultaneous accessing trend classifying means which stores attribute information on any content whose content location information said receiving apparatus has inquired about and classifies contents to be simultaneously released on the basis of the attribute information on said content, and simultaneous accessibility determining means which extracts contents to be simultaneously released on the basis of information classified by said simultaneous accessing trend classifying means, and
said transmitting apparatus transmits a location table in which content location information on the contents extracted by said simultaneous accessibility determining means and the content identifiers of said contents are associated with each other.

5. The content multicasting system according to Claim 1, wherein said transmitting apparatus is provided with location solution information setting means which stores attribute information on any content whose content location information said receiving apparatus has inquired about, generates, for each content, location solution information indicating a method of acquiring content location information on said content at least on the next and subsequent occasions on the basis of the attribute information on said content, and prepares a location solution information table in which content identifiers and location solution information related to said content identifiers are matched with each other,
said transmitting apparatus transmits said location solution information table to the receiving apparatus, said receiving apparatus is provided with location solution information storage means which receives said location solution information table transmitted from said transmitting apparatus and stores any updated location solution information table out of said received location solution information tables and location solution means which references said location solution information table with priority and acquires content location information on the basis of location solution information in said location solution information table.

6. The content multicasting system according to Claim 5, wherein said location solution information comprises a combination of all or some of the conditions of acquiring content location information on said content, information on the device which inquires about said content location information, and information for identifying the location table in which said content location information is stated.

7. The content multicasting system according to Claim 5, wherein said receiving apparatus sends said content identifier and a receiving apparatus identifier for uniquely identifying said receiving apparatus to said transmitting apparatus when said receiving apparatus is to inquire of said transmitting apparatus about content location information, and said location solution information setting means of said transmitting apparatus sets location solution information so as to differ from one receiving apparatus to another.

8. The content multicasting system according to Claim 5, wherein said location solution information is so specified as to acquire content location information in said location table transmitted in advance by said transmitting apparatus.

9. A content multicast transmitting apparatus comprising content registering means which assigns content identifiers for uniquely identifying contents, registers said contents and manages them; distribution schedule setting means which sets a delivery schedule indicating a delivery period, which is content location information on contents registered with said content registering means, and a release schedule indicating a release period, which is included in said content location information; simultaneous accessibility determining means which extracts, on the basis of said content location information set by said distribution schedule setting means, contents to be simultaneously released out of the contents set by said distribution schedule setting means; location table registering means which receives, from said content registering means or said distribution schedule setting means, content location information on the contents extracted by said simultaneous accessibility determining means, and generates and stores a location table indicating a relationship between content location information on said contents and their content identifiers; and location distribution control means which receives said location table generated by said location table registering means and instructs transmission of said location table.

10. The content multicast transmitting apparatus according to Claim 9, further provided with broadcast transmitting means for transmitting data to a broadcast network which makes possible multicasting and/or communication control means for transmitting data to a telecommunications network which makes possible multicasting and interactive distribution, wherein:
said broadcast transmitting means and said communication control means transmit data received from said distribution schedule setting means and said location distribution control means, and said communication control means hands over to said distribution schedule setting means the data received from said telecommunications network.

11. The content multicast transmitting apparatus according to Claim 9, wherein said content registering means registers attribute information on the contents to be registered, and said simultaneous accessibility determining means extracts contents to be simultaneously released on the basis of attribute information on the content registered with said content registering means.

12. The content multicast transmitting apparatus according to Claim 9, wherein said location distribution control means extracts only the location table regarding contents immediately before release, and said location table is transmitted by handing over said extracted location table to either said broadcast transmitting means or said communication control means immediately before the release of each of said contents.

13. The content multicast transmitting apparatus according to Claim 9, further provided with simultaneous accessing trend classifying means which receives from said location distribution control means the content identifiers of contents whose location has been inquired about, acquires, from said content registering means and said distribution schedule setting means, content location information on said contents and/or attribute information on the contents and stores them, and classifies contents to be simultaneously released on the basis of said acquired content location information and the attribute information on said contents, wherein:
the simultaneous accessibility determining means extracts contents to be simultaneously released on the basis of the information classified by said simultaneous accessing trend classifying means.

14. The content multicast transmitting apparatus according to Claim 9, further provided with simultaneous accessing trend classifying means which receives from said location distribution control means the content identifiers of contents whose location has been inquired about, acquires, from said content registering means and said distribution schedule setting means, content location information on said contents and/or attribute information on the contents and stores them, generates, for each content location, solution information indicating a method of acquiring content location information on said contents at least on the next and subsequent occasions on the basis of said acquired content location information and the attribute information on said contents, and prepares a location solution information table in which content identifiers and location solution information related to said content identifiers are matched with each other, wherein:
said location distribution control means receives the location solution information table generated by said location solution information setting means and instructs its transmission.

15. The content multicast transmitting apparatus according to Claim 14, wherein said location solution information comprises a combination of all or some of the conditions of acquiring content location information on said contents, information on the device which inquires about said content location information, and information for identifying the location table in which said content location information is stated.

16. The content multicast transmitting apparatus according to Claim 14, wherein said location solution information setting means of said transmitting apparatus so sets said location solution information as to differ from one receiving apparatus to another.

17. The content multicast transmitting apparatus according to Claim 14, wherein said location solution information is so specified as to acquire content location information in said location table transmitted in advance by said transmitting apparatus.

18. A content multicasting receiving apparatus comprising reception monitoring means which receives data from a transmitting apparatus and monitors out of said data a location table indicating a relationship between location information on contents and content identifiers; reception type determining means which determines a type of the location table detected by said reception monitoring means; location table update managing means which checks for each type updating of a location table received by said reception type determining means; location table storage means which stores the location table in which only contents to be simultaneously released are stated out of the location table determined by said location table update managing means to have been updated; and location solution means which searches with priority location tables stored in said location table storage means and acquires content location information.

19. The content multicasting receiving apparatus according to Claim 18, further provided with broadcast receiving means for receiving data from a broadcast network which makes possible multicasting and/or communication control means for receiving data from a telecommunications network which makes possible multicasting and interactive distribution, wherein said communication control means transmits data received from said location solution means to said transmitting apparatus over said telecommunications network.

20. The content multicasting receiving apparatus according to Claim 18, wherein said reception monitoring means monitors reception of said location solution information table, and said reception type determining means identifies said location solution information table out of the tables received from said reception monitoring means, the apparatus being further provided with location solution information updating means which receives the location solution information table identified by said reception type determining means and location solution information storage means which stores the location solution information table judged by said location solution information updating means to have been updated, wherein:
said location solution means references said location solution information table with priority and acquires content location information on the basis of the location solution information in said location solution information table.

21. A content multicasting method using a transmitting apparatus for managing content identifiers which uniquely identify contents and content location information indicating the locations of said contents and transmitting them to a receiving apparatus, and the receiving apparatus for acquiring said contents on the basis of said received content identifiers and said content location information, wherein:
said transmitting apparatus extracts contents to be simultaneously released, out of contents for which a delivery schedule indicating a delivery period and a release schedule indicating a release period are set as attribute information, on the basis of said attribute information, and transmits to the receiving apparatus a location table in which content location information on said extracted contents and the content identifiers of said contents are associated with each other, and said receiving apparatus acquires content location information by searching said received location table with priority.

22. The content multicasting method according to Claim 21, whereby said location table is distributed over a multicasting network using a broadcast network and a telecommunications network, an interactive network using a telecommunications network, or a combination of such networks.

23. The content multicasting method according to Claim 21, whereby said transmitting apparatus extracts only a location table concerning contents immediately before release out of the location tables in said location table and transmits said extracted location table, and said receiving apparatus acquires content location information by searching said received location table with priority.

24. The content multicasting method according to Claim 21, whereby said transmitting apparatus stores location information and attribute information on any content whose content location information said receiving apparatus has inquired about, and transmits, on the basis of a result of totaling of said stored location information and attribute information on the content, a location table in which content location information on the content to be simultaneously released and the content identifier of said content are associated with each other, and said receiving apparatus acquires content location information by searching said received location table with priority.

25. The content multicasting method according to Claim 21, whereby said transmitting apparatus stores location information and attribute information on any content whose content location information said receiving apparatus has inquired about, generates, for each content, location solution information indicating a method of acquiring content location information on said content at least on the next and subsequent occasions on the basis of said acquired content location information and the attribute information on said content, and transmits said location solution information, and said receiving apparatus acquires content location information by giving priority to the method contained in said received location solution information.

26. The content multicasting method according to Claim 25, wherein said location solution information comprises a combination of all or some of the conditions of acquiring content location information on said content, information on the device which inquires about said content location information, and information for identifying the location table in which said content location information is stated.

27. The content multicasting method according to Claim 25, wherein said transmitting apparatus so sets said location solution information as to differ from one receiving apparatus to another.

28. The content multicasting method according to Claim 25, wherein said location solution information is so specified as to acquire content location information in said location table.

29. A content multicasting system provided with a transmitting apparatus for managing content identifiers which uniquely identify contents and content location information indicating locations of said contents and a receiving apparatus for acquiring said contents by inquiring of said transmitting apparatus on the basis of said content identifiers and thereby obtaining said content location information, wherein:
said transmitting apparatus comprises location table registering means which prepares and stores a location table in which content location information on contents, a delivery schedule indicating a delivery period of said contents or a release schedule indicating a release period, and content identifiers of the pertinent contents are associated with each other and location distribution control means which controls distribution of the location tables registered with the location table registering means to the receiving apparatus, and transmits said location tables to the receiving apparatus, and
said receiving apparatus comprises simultaneous accessibility determining means which receives said location table transmitted from said transmitting apparatus and extracts contents to be simultaneously released on the basis of the delivery schedule or release schedule stated in an updated location table out of said received location tables; location table storage means which stores location tables classified by said simultaneous accessibility determining means into location tables for multicasting use as those to be simultaneously released and other location tables for ordinary use; and location solution means which, when content location information is to be acquired, acquires the content location information by searching with priority said location tables for multicasting use stored in said location table storage means.

30. The content multicasting system according to Claim 29, wherein said simultaneous accessibility determining means further classifies location tables for multicasting use into a plurality of types of location tables for multicasting use.

31. The content multicasting system according to Claim 30, wherein said plurality of types of location tables for multicasting use are further classified by broadcast channel and prepared separately for each broadcast channel.

32. The content multicasting system according to Claim 30, wherein said plurality of types of location table for multicasting use are further classified by telecommunications operator and prepared separately for each telecommunications operator.

33. A content multicasting method using a transmitting apparatus for managing, being associated with each other, content identifiers which uniquely identify contents and content location information indicating the locations of said contents and transmitting them to a receiving apparatus, and the receiving apparatus for acquiring said contents on the basis of said received content identifiers and said content location information, wherein:
said transmitting apparatus transmits to the receiving apparatus the location tables in which a delivery schedule indicating a delivery period of said contents or a release schedule indicating a release period are added to said content identifiers and said content location information, being associated with each other, and said receiving apparatus classifies by simultaneous accessibility determination processing to extract contents to be simultaneously released on the basis of the delivery schedule or release schedule stated in said location table into received location tables for multicasting use and location tables for ordinary use and, when contents are to be acquired, acquires content location information by searching with priority the location tables for multicasting use.

34. The content multicasting method according to Claim 33, whereby location tables for multicasting use are further classified in said simultaneous accessibility determination processing into a plurality of types of location tables for multicasting use.

35. The content multicasting method according to Claim 34, whereby said plurality of types of location tables for multicasting use are classified by broadcast channel and prepared separately for each broadcast channel.

36. The content multicasting method according to Claim 34, whereby said plurality of types of location tables for multicasting use are further classified by telecommunications operator and prepared separately for each telecommunications operator.

37. A content multicast transmitting apparatus comprising:
content registering means which assigns content identifiers for uniquely identifying contents, registers said contents matched with these content identifiers and content location information indicating the locations of the pertinent contents, and manages them;
distribution schedule setting means which sets a delivery schedule indicating a delivery period of the contents registered with said content registering means or a release schedule indicating a release period of said contents, the contents being matched with the respective content identifiers;
location table registering means which receives content location information on the contents from said content registering means or the delivery schedule or the release schedule of the contents from the distribution schedule setting means and generates and stores a location table indicating a relationship among the content location information on said contents, said delivery schedule or release schedule and the content identifiers; and
location distribution control means which receives said location table generated by said location table registering means and instructs transmission of said location table.

38. A content multicasting receiving apparatus comprising:
reception monitoring means which receives data from a transmitting apparatus and monitors out of said data a location table indicating a relationship among location information on contents, a delivery schedule or release schedule of the contents, and content identifiers;
location table update managing means which checks updating of a location table detected by said reception monitoring means;
simultaneous accessibility determining means which, with respect to location tables, judged by said location table update managing means to have been updated, extracts, out of contents included in the location table, contents to be simultaneously released on the basis of said delivery schedule or release schedule and said content location information;
location table storage means which stores the location tables classified by said simultaneous accessibility determining means into location tables for multicasting use as those to be simultaneously released and other location tables for ordinary use; and
location solution means which, when content location information is to be acquired, acquires the content location information by searching with priority said location tables for multicasting use stored in said location table storage means.
